# EUROPÄISCHE PATENTANMELDUNG

(11) **EP 4 201 987 A1**
(43) Veröffentlichungstag der Anmeldung: **28.06.2023**
(21) Anmeldenummer: 21217035.1
(22) Anmeldetag: 22.12.2021
(51) Int. Cl.: C08J 11/12, C07C 37/52

(54) **PYROLYSE VON POLYCARBONAT-HALTIGEM MATERIAL IN KOMBINATION MIT PHOSPHORHALTIGER ORGANISCHER VERBINDUNG ZUR WIEDERGEWINNUNG VON ROHSTOFFEN**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Es wird ein Verfahren zur Pyrolyse von Polycarbonat-haltigem Material zur Wiedergewinnung von Rohstoffen beschrieben, umfassend mindestens die folgenden Schritte
(a) Einbringung von Pyrolysegut, enthaltend mindestens eine Polycarbonat enthaltende Verbindung und eine Gesamtmenge von phosphorhaltiger, organischer Verbindung, wobei besagte Gesamtmenge bezogen auf das Gesamtgewicht des Pyrolysegutes einen Anteil von mindestens 0,01 Gew.-% Phosphor beiträgt, in einen Reaktor;
(b) Zersetzung zumindest der in Schritt (a) eingebrachten Polycarbonat enthaltenden Verbindung in dem Reaktor bei einer Temperatur von 300°C bis 700°C unter Erhalt von in der Gasphase befindlichem Produkt als Pyrolysat und von nicht in der Gasphase befindlichem Pyrolyserückstand, wobei
(i) während der besagten Zersetzung die Menge an Sauerstoffgas im Reaktor höchstens 2,0 Vol.% bezogen auf das Gesamtvolumen der im Reaktor befindlichen Gase beträgt, und
(ii) während der besagten Zersetzung das Pyrolysat aus dem Reaktor herausgeführt wird, und
(iii) der besagte Pyrolyserückstand aus dem Reaktor herausgeführt wird;

(c) Abkühlung des herausgeführten Pyrolysates auf eine Temperatur von weniger als 300°C unter Erhalt von Pyrolyseprodukt, ausgewählt aus Pyrolysatkondensat, Pyrolysatresublimat oder einer Mischung daraus;
(d) optional Aufarbeitung des Pyrolyseprodukts.

Unter Ausführung dieses Verfahrens in einer dafür ausgestalteten Vorrichtung lassen sich Rohstoffe zur Herstellung von Polycarbonat-haltigem Material, insbesondere Phenol, aus dem Pyrolysegut in erhöhter Ausbeute zurückgewinnen.

## Beschreibung

Polycarbonat-haltiges Material - wie Polycarbonat Mischungen z.B. Polycarbonatharz oder Polycarbonat Verbundharz - findet als Werkstoff für Verbrauchsgüter Anwendung. Entsprechende Polycarbonatharze oder Polycarbonat Verbundharze werden durch Mischen des Polycarbonats mit anderen Polymeren hergestellt, wie z.B. durch Mischen von Polycarbonat mit Acrylnitril-Butadien-Styrol (ABS). Da diese Polycarbonat-haltigen Materialien hervorragende Eigenschaften haben wie Schlagfestigkeit, Fließfähigkeit, Zähigkeit und Flammschutz, werden sie in einer Vielzahl von Anwendungen eingesetzt, z.B. Elektrogeräten und Autos.

Nachdem obige Polycarbonatharze und Polycarbonat Verbundharze als Bestandteil vieler Handelsprodukte auf den Markt gebracht wurden, fallen sie am Ende der Lebensdauer der Handelsprodukte im Abfall als Wertstoff an. Überwiegend werden alte Handelsprodukte der Entsorgung zugeführt und gegen neue Handelsprodukte ausgetauscht. Die Gesamtmenge der dabei entstehenden Kunststoffabfälle nimmt jedes Jahr zu. Etwa 60% der Gesamtmenge dieser Abfälle wird durch Verbrennung oder auf der Deponie entsorgt.

Bei der Verbrennung des Kunststoffabfalls wird CO₂ in die Luft emittiert, das zu der globalen Erwärmung beiträgt. Plastikabfall auf den Deponien nimmt wegen seiner geringen Dichte ein großes Volumen ein und kann von dort auch zur allgemeinen Verschmutzung in Flüssen und Meeren beitragen. Aus diesem Grunde ist es wichtig, effiziente Recyclingmethoden zu entwickeln, mit denen das Abfallproblem gelöst werden kann und auch gleichzeitig fossile Ressourcen eingespart werden können.

Da der Anteil der oben genannten Polycarbonat(verbund)harze ca. 8 % des Polymermarktes ausmacht, stand das Recycling von Polycarbonaten bisher nicht im Fokus der Entwicklungen. Für die Zukunft ist es jedoch aufgrund des weiterhin wachsenden Kunststoffmarktes wichtig, für alle Polymerklassen Recycling Technologien zu entwickeln, um sowohl die CO₂ Emission zu vermindern als auch fossile Energien einzusparen.

Die Verfahren für das Recycling von Kunststoffabfällen lassen sind grob in 3 Kategorien unterteilen:
(1) mechanisches Recycling: Hierbei werden die Kunststoffabfälle so wie sie sind wieder eingeschmolzen und können dann wiederverwendet werden. Dies ist beispielsweise für sehr reine PC Abfälle möglich.
(2) chemisches und thermochemisches Recycling: Hierbei werden die Kunststoffabfälle in Monomere depolymerisiert oder zu kleineren Molekülen zersetzt, um nützliche chemische Rohstoffe zu gewinnen und
(3) thermisches Recycling, wobei die Kunststoffabfälle hierin zu Abgas und Wärmeenergie umgesetzt werden.

Die aus dem thermochemischen Recycling gewonnenen chemischen Rohstoffe können zur Synthese neuer Kunstharze oder anderer chemischer Produkte verwertet werden.

Das thermochemische Recycling wird als Pyrolyse bezeichnet. In den meisten Fällen wird die Pyrolyse für Verpackungsmüll angewendet und daraus ein Pyrolyse-Öl gewonnen, das als eine Art recyceltes Naphtha in den bekannten Raffinerie Prozessen mit Cracker als Drop in Lösung verwendet wird. Über die Pyrolyse von Polycarbonat in diesem Pyrolyseprozess ist wenig bekannt.

Die Verwendung von Katalysatoren oder Additiven kann im Pyrolyse Prozess zur Erniedrigung der Betriebstemperatur, zur Verkürzung der Reaktionszeit, zur Erhöhung der Degradationseffizienz und zur Einschränkung der Produktverteilung führen, was den Prozess effizienter macht.

Durch Einsatz von Metallhalogenid-Salzen als Katalysator, insbesondere Kupfer- und Eisenchlorid Katalysatoren, gelang es, bei der Pyrolyse von Polycarbonat bei 600° C mehr Phenolverbindungen zu erzeugen als ohne Katalysator (M. Blazsó, J. Anal. Appl. Pyrolysis, 1999, 51, 73-88). Weiter wurde die katalytische Pyrolyse von Polycarbonat durch Einsatz verschiedener Metallchlorid Verbindungen mit dem Ziel optimiert, die Verkohlungsrückstände zu reduzieren (J. Chiu et al., Waste Manage., 2006, 26, 252-259). Der Einfluss des Katalysators wurde bei 400 °C (1 h) bestimmt, da bei dieser Temperatur die nicht-katalysierte Pyrolyse sehr langsam abläuft. Die Wahl des Metallchlorids hatte einen großen Effekt auf die Pyrolyse. NaCl, CrCl₃, CuCl₃ und AlCl₃ verbesserten die Pyrolyseraten nicht, während SnCl₂ und ZnCl₂ das Polycarbonat mit einem Gewichtsverlust von über 80% abbauten.

Durch die Verwendung von Metallsalz-Katalysatoren ließ sich ebenfalls die Produktverteilung der Pyrolyse von Polycarbonat verbessern. Während in der nicht katalytischen Polycarbonat-Pyrolyse das flüssige Produkt elf verschiedene Produkte enthielt, erhielten die Gemische mit ZnCl₂ oder SnCl2 als Katalysator nur sieben Hauptprodukte, einschließlich Bisphenol A, Phenol und Diphenylether mit geringeren Mengen an Verunreinigungen.

Für die Pyrolyse von Polycarbonat-haltigem Material sind auch Katalysatoren bestehend aus Metalloxiden und Zeolithen mit unterschiedlichen Porösitäten und Säure/Basizität bekannt (E. V. Antonakou et al. Polym. Degrad. Stab., 2014, 110, 482-491. M. N. Siddiqui et al., Thermochim. Acta, 2019, 675, 69-76).

Mit Hilfe basischer Katalysatoren, wie CaO und MgO, ließ sich in der Pyrolyse signifikant die Temperatur auf 400-450 °C senken, bei gleichzeitiger Produktion flüssiger Fraktionen mit hohen Anteilen an phenolischen Verbindungen (D. S. Achilias et al., J. Appl. Polym. Sci., 2009, 114, 212-221. E. C. Vouvoudi et al., Front. Environ. Sci. Eng., 2017, 11, 9). Aus einer Mischung von Polypropylen (PP), Acrylnitril-Butadien-Styrol (ABS), High Impact Polystyrol (HIPS) und Polycarbonat konnten eine langsame Freisetzung von BPA und CO₂ aus Polycarbonat bei 440 °C nachgewiesen werden.

Unter Einfluss von Erdalkalioxiden und Hydroxiden (MgO und Mg(OH)₂) konnte in der Dampf Pyrolyse von reinem Polycarbonat eine bessere Effizienz und höhere BPA-Ausbeute (78%) bei 300 °C erreicht werden, während beim Erhitzen auf 500 °C mit Hilfe von MgO ein großer Anteil an Phenol (84%) hergestellt wurde (T. Yoshioka et al.,Polym. Degrad. Stab., 2009, 94, 1119-1124, T. Yoshioka et al., Ind. Eng. Chem. Res., 2014, 53, 4215-4223).

In der Druckschrift US 2007/0185309 A1 wird eine Methode zur Depolymerisation von Polycarbonaten mit Wasser in superkritischen oder subkritischen Zustand beschrieben. Eine hochreine Dihydroxy-Komponente (BPA,) die ein Bestandteil des Polycarbonats ist, konnte in hoher Ausbeute mit dieser Methode erhalten werden. Diese Depolymerisationsmethode ist umweltfreundlich, weil sie auf die Nutzung von organischen Lösemitteln verzichtet. Sie zeigt eine hohe Zersetzungsrate und wenig Nebenprodukte.

Die im Stand der Technik beschriebenen Pyrolyse-Verfahren eignen sich allesamt nicht für die industrielle bzw. gewerbliche Anwendung, da sie zumeist als Pyrolysen im Microgramm Maßstab für analytische Zecke vorgesehen sind. Die im Stand der Technik dargelegten Pyrolysen werden daher jeweils in nicht für die industrielle bzw. gewerbliche Anwendung geeigneten Pyrolysevorrichtungen ausgeführt.

Insbesondere für die Pyrolyse größerer Mengen an Polycarbonat-haltigen Materialien, die neben Polycarbonat zusätzlich weitere Inhaltsstoffe umfassen, sind neue Verfahren mit passenden Reaktoren nötig, mit deren Hilfe sich der Einfluss der weiteren Inhaltsstoffe auf das Ergebnis der Pyrolyse des Polycarbonats verringern lässt. Es hat sich beispielsweise gezeigt, dass sich bei der Pyrolyse von Polycarbonat- enthaltender Verbindung, welche sauerstofffunktionalisierte, aromatische Strukturfragmente enthält, (insbesondere welche sauerstofffunktionalisierte Diphenylalkylen-Strukturfragmente enthält) unter anderem eine Mischung von Hydroxyl-funktionalisierten, aromatischen Verbindungen gebildet wird. Diese Mischung muss zur weiteren Verwendung aufgetrennt und die erhaltenen Trennungsprodukte sofern möglich unterschiedlichen Verwertungsprozessen zugeführt werden. Daher ist es wünschenswert, den Pyrolyseprozess derart zu steuern, dass aus Polycarbonat-haltigem Material gezielt solche Pyrolyseprodukte mit hoher Selektivität erhalten werden, die einem hohen Gehalt an für die Polycarbonat-Herstellung wieder verwertbaren aromatischen Hydroxyverbindungen wie z.B. Phenol, enthalten. Bisher wurden wünschenswerte Anteile an Phenol überwiegend bei Standardpyrolysebedingungen von mindestens 600°C unter Einsatz eines Zeolith-Katalysators bei langen Verweilzeiten erhalten.

Es war daher die Aufgabe, für die gewerbliche Ausführung einer Pyrolyse ein Verfahren sowie darin nutzbare Pyrolysevorrichtungen für die Pyrolyse von Pyrolysegut, mindestens enthaltend Polycarbonat enthaltende Verbindung(en), bevorzugt mit sauerstofffunktionalisiertem, aromatischem Strukturfragment, bereitzustellen, mit dessen Einsatz auch bei größeren Mengen von Pyrolysegut eine Pyrolyse mit verbesserter Selektivität bei moderaten Temperaturen und kurzen Verweilzeiten durchgeführt wird, so dass für die Herstellung von Polycarbonat-haltigem Material wiederverwertbare Spaltprodukte erhalten werden, bevorzugt in einer Menge von mehr als 40 Gew.-% bezogen auf das Gesamtgewicht der Polycarbonat-enthaltenden Verbindung in dem in der Pyrolyse eingesetzten Pyrolysegut.

Ein Gegenstand der vorliegenden Anmeldung ist deshalb ein Verfahren zur Pyrolyse von Polycarbonat-haltiger Verbindung, umfassend mindestens die folgenden Schritte
(a) Einbringung von Pyrolysegut, enthaltend mindestens eine Polycarbonat enthaltende Verbindung und eine Gesamtmenge einer oder mehrerer phosphorhaltiger organischer Verbindungen, wobei besagte Gesamtmenge bezogen auf das Gesamtgewicht des Pyrolysegutes einen Anteil von mindestens 0,01 Gew.-% Phosphor, bevorzugt mindestens 0,05 Gew.-% Phosphor, weiter bevorzugt mindestens 0,1 Gew.-% Phosphor, besonders bevorzugt mindestens 0,5 Gew.-% Phosphor, beiträgt, in einen Reaktor;
(b) Zersetzung der in Schritt (a) eingebrachten Polycarbonat enthaltenden Verbindung in dem Reaktor bei einer Temperatur von 300°C bis 700°C unter Erhalt von in der Gasphase befindlichem Produkt als Pyrolysat und nicht in der Gasphase befindlichem Pyrolyserückstand, wobei
   (i) während der besagten Zersetzung die Menge an Sauerstoffgas im Reaktor von 0 bis 2,0 Vol.% bezogen auf das Gesamtvolumen der im Reaktor befindlichen Gase beträgt, und
   (ii) während der besagten Zersetzung das besagte Pyrolysat aus dem Reaktor herausgeführt wird, und
   (iii) der besagte Pyrolyserückstand aus dem Reaktor herausgeführt wird;
(c) Abkühlung des herausgeführten Pyrolysates auf eine Temperatur von weniger als 300°C unter Erhalt von Pyrolyseprodukt, ausgewählt aus Pyrolysatkondensat, Pyrolysatresublimat oder einer Mischung daraus;
(d) optional Aufarbeitung des Pyrolyseproduktes.

Als "Pyrolysegut" wird die Gesamtheit der in den Reaktor zur Pyrolyse eingebrachten Stoffe bezeichnet, die dort in Abwesenheit von Sauerstoffgas oder in Gegenwart einer reduzierten Menge an Sauerstoffgas thermisch behandelt wird. Das Pyrolysegut ist vor der Einbringung in den Reaktor bevorzugt festförmig.

Unter "Pyrolysat" wird die Gesamtheit diejenigen durch Pyrolyse gebildeten Produkte verstanden, die sich unter den Bedingungen des Schrittes (b) (insbesondere als Gas und/oder als Aerosol) in der Gasphase des Reaktors befinden.

Unter "Pyrolyserückstand" wird die Gesamtheit derjenigen durch Pyrolyse gebildeten Stoffe und der sonstigen Rückstände des Pyrolyseguts verstanden, die sich unter den Bedingungen des Schrittes (b) nicht in der Gasphase des Reaktors befinden. Es sind solche Ausführungsformen des Verfahrens bevorzugt, die sich dadurch kennzeichnen, dass der Pyrolyserückstand im Reaktor festförmig ist.

Unter "Pyrolyseprodukt" wird die Gesamtheit derjenigen Produkte aus dem Pyrolysat verstanden, die in Schritt (c) bei der Abkühlung des Pyrolysates durch Kondensation und/oder Resublimation anfallen. Pyrolyseprodukt, das flüssig ist, wird auch als Pyrolyseöl bezeichnet.

Falls nicht explizit im Zusammenhang anders definiert, ist ein Stoff (z.B. Material, Pyrolysegut, Pyrolysat, Pyrolyseprodukt, Pyrolyserückstand) "flüssig", wenn er bei 20°C und 1013 mbar im flüssigen Aggregatzustand vorliegt. Falls nicht explizit im Zusammenhang anders definiert, ist ein Stoff (z.B. Material, Pyrolysegut, Pyrolysat, Pyrolyseprodukt, Pyrolyserückstand) "festförmig", wenn er bei 20°C und 1013 mbar im festen Aggregatzustand vorliegt. Falls nicht explizit im Zusammenhang anders definiert, ist ein Stoff (z.B. Material, Pyrolysegut, Pyrolysat, Pyrolyserückstand) "gasförmig", wenn er bei 20°C und 1013 mbar im als Gas vorliegt.

Ein Stoff ist "organisch", wenn seine chemische Struktur mindestens eine kovalente Kohlenstoff-Wasserstoff-Bindung enthält.

Bei den im Rahmen dieser Anmeldung für Polymere bzw. polymere Inhaltsstoffe angegebenen mittleren Molmassen handelt es sich - sofern nicht explizit anders gekennzeichnet - stets um gewichtsmittlere Molmassen Mw, die grundsätzlich mittels Gelpermeationschromatographie mit Hilfe eines RI-Detektors bestimmbar sind, wobei die Messung zweckmäßig gegen einen externen Standard erfolgt.

Eine "Polycarbonat enthaltene Verbindung" ist eine polymere Verbindung, ausgewählt aus einem Homo- oder Copolymer, die durch Polyreaktion erhalten wird und wobei mindestens eine Wiederholungseinheit mindestens eine Struktureinheit * 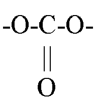 * enthält, worin * eine Valenz des Polymerrückgrats kennzeichnet.

Ein "Polymer, enthaltend von Styrol abgeleitete Struktureinheiten," ist eine polymere Verbindung, ausgewählt aus einem Homo- oder Copolymer, die durch Polyreaktion erhalten wird und als Wiederholungseinheit mindestens eine Struktureinheit enthält, die sich von Styrol ableitet.

Ein "Reaktor" ist ein Volumen, in dem eine chemischen Umwandlung, z.B. eine thermische Zersetzung von Material aus dem Pyrolysegut, stattfindet. Dies kann für eine thermische Zersetzung beispielsweise das Volumen eines beheizten Gefäßes sein, in dem sich das Pyrolysegut befindet.

Es ist erfindungsgemäß vorteilhaft, das Pyrolysegut gemäß erfindungsgemäßem Verfahren in einen Reaktor einzubringen, der sich dadurch gekennzeichnet, dass er ausgewählt wird aus kontinuierlichem Rührkesselreaktor (CSTR), Festbettreaktor, Fließbettreaktor, Schneckenreaktor, Schneckenförderer Reaktor, Flugstromreaktor, Mitreißstromreaktor, Drehrohrreaktor, Fließbettreaktor, Schaufelreaktor. Insbesondere sind solche Reaktoren bevorzugt geeignet, in denen das Pyrolysegut kontinuierlich eingebracht werden kann und werden insbesondere ausgewählt aus Drehrohrreaktor, kontinuierlichem Rührkesselreaktor (CSTR), Festbettreaktor (insbesondere mit kontinuierlichem Bettaustausch (Schachtreaktor) mit innenliegendem Wärmetauscher, bevorzugt mit innenliegenden Wärmetauscherohren), Schneckenreaktor, Schneckenfördererreaktor, Flugstromreaktor, Drehrohrreaktor oder Wirbelschichtreaktor. Ein ganz besonders bevorzugter Reaktor einer Ausführungsform des Verfahrens wird ausgewählt aus Schneckenreaktor, Drehrohrofen oder Wirbelbett. Weitere für das erfindungsgemäße Verfahren bevorzugte Reaktoren und deren Ausführungsformen werden im Rahmen der Ausführungsformen der erfindungsgemäßen Vorrichtung zur Pyrolyse, sowie im Rahmen einer Ausführungsform des Verfahrens mit Einsatz von Katalysator, beschrieben (*vide infra*)*.*

Das in den Reaktor eingebrachte Pyrolysegut umfasst erfindungsgemäß mindestens eine Polycarbonat enthaltende Verbindung und mindestens eine phosphorhaltige, organische Verbindung. Das entsprechende Pyrolysegut kann auf verschiedene Weise bereitgestellt werden: Die besagten Verbindungen können beispielsweise von vornherein in einem Material eines zu rezyklierenden Abfallproduktes enthalten sein, wobei dieses Material zum Beispiel als Kunststoffabfall anfällt und zur Rohstoffwiedergewinnung dem Pyrolysegut gemäß vorliegender Erfindung zugefügt wird. Es ist ebenso beispielsweise möglich, dass ein Material eines zu rezyklierenden Abfallproduktes Polycarbonat enthaltende Verbindung aber gegebenenfalls keine besagte phosphorhaltige, organische Verbindung enthält, und diesem Material bevor es zur Rohstoffwiedergewinnung dem Pyrolysegut gemäß vorliegender Erfindung zugefügt wird, mit besagter phosphorhaltigen, organischen Verbindung versetzt wird.

Im Rahmen einer Ausführungsform des erfindungsgemäßen Verfahrens, enthält das besagte Pyrolysegut die besagte Polycarbonat enthaltende Verbindung in einer Gesamtmenge von 10,0 bis 80,0 Gew.-%, weiter bevorzugt 30,0 bis 70,0 Gew.-%, jeweils bezogen auf das Gesamtgewicht des Pyrolysegutes.

Es hat sich als vorteilhaft erwiesen, wenn besagte Polycarbonat enthaltende Verbindung, bevorzugt in Abmischung mit besagter phosphorhaltigen, organischen Verbindung, in dem Pyrolysegut bevorzugt in Form festförmiger Teilchen (insbesondere in Form eines körnigen Gemenges) vorliegt und in den Reaktor eingebracht wird. Ein körniges Gemenge der besagten Mischung wird aus einer Vielzahl an losen, festförmigen Partikeln der besagten Mischung gebildet, die wiederum sogenannte Körner umfassen. Ein Korn ist eine Bezeichnung für die partikulären Bestandteile von Pulvern (Körner sind die losen, festförmigen Partikel), Stäuben (Körner sind die losen festförmigen Partikel), Granulaten (lose, festförmige Partikel sind Agglomerate aus mehreren Körnern) und anderen körnigen Gemengen. Die Rieselfähigkeit eines körnigen Gemenges betrifft sein Vermögen, unter eigenem Gewicht frei aus einem Rieseltesttrichter mit einem Auslauf von 16,5 mm Durchmesser zu rieseln.

Beispielsweise können entsprechende festförmige Teilchen erhalten werden, in dem ein Material eines zu rezyklierenden Abfallproduktes, welches besagte Polycarbonat enthaltende Verbindung und besagte phosphorhaltige, organische Verbindung enthält, zur Rohstoffwiedergewinnung gemahlen oder geschreddert wird und die resultierenden festförmigen Teilchen dem Pyrolysegut gemäß vorliegender Erfindung zugefügt werden.

Vorzugsweise weisen die festförmigen Teilchen, insbesondere die losen, festförmigen Partikel des körnige Gemenges einen mittleren Durchmesser X₅₀,₃ (Volumenmittel) von 0,01 mm bis 5 cm, bevorzugt von 0,1 mm bis 5 cm, auf. Der mittlere Teilchengrößendurchmesser X₅₀,₃ wird durch Siebung oder mittels eines Partikelgrößenanalysators Camsizer der Fa. Retsch bestimmt.

Generell kann die besagte Polycarbonat enthaltende Verbindung beispielsweise ein Homopolymer, ein Copolymer, ein Kammpolymer, ein Blockpolymer oder Mischungen davon, sein.

Es sind solche besagte Polycarbonat enthaltenden Verbindungen besonders geeignet, in denen als Polycarbonat enthaltende Verbindung mindestens eine Verbindung enthalten ist, die mindestens zehn Struktureinheiten * 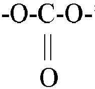 * enthält, worin * eine Valenz des Polymerrückgrats

### kennzeichnet.

Für das erfindungsgemäße Verfahren geeignete Polycarbonat enthaltende Verbindungen sind bevorzugt aromatische Polycarbonate, Polycarbonat-Copolymere und/oder aromatische Polyestercarbonate. Diese sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 007 934).

Im Rahmen einer erfindungsgemäß bevorzugten Ausführungsform der Erfindung enthält daher das besagte Pyrolysegut mindestens eine Polycarbonat enthaltende Verbindung, welche sauerstofffunktionalisierte, aromatische Strukturfragmente enthält.

Die Herstellung der als eine Polycarbonat enthaltende Verbindung einsetzbaren aromatischen Polycarbonate erfolgt z. B. durch Umsetzung von aromatischen Verbindungen mit mindestens zwei Hydroxygruppen, insbesondere von Diphenolen, mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Verbindungen mit mindestens zwei Hydroxylgruppen, insbesondere von Diphenolen, mit beispielsweise Diphenylcarbonat möglich.

Erfindungsgemäß sind solche besagte Pyrolysate vorteilhaft einsetzbar, in denen die Polycarbonat enthaltende Verbindung mindestens eine Verbindung ist, die durch Umsetzung von zumindest den Verbindungen (i) mindestens einer aromatischen Verbindung mit mindestens zwei Hydroxylgruppen, besonders bevorzugt Bisphenol-A, und (ii) Phosgen oder Diphenylcarbonat erhalten wurde.

Zur Darstellung der Polycarbonat enthaltenden Verbindung wird bevorzugt mindestens eine aromatische Verbindung mit mindestens zwei Hydroxylgruppen verwendet, die aus der allgemeinen Formel (I) ausgewählt wird, 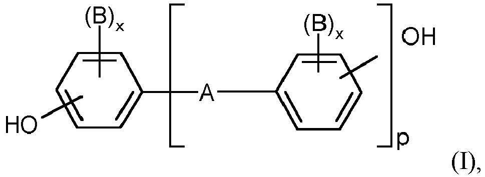 worin
A eine Einfachbindung, C₁ bis Cs-Alkylen, C₂ bis Cs-Alkyliden, C₅ bis C₆-Cycloalkyliden,-O-, -SO-, -CO-, -S-, -SO₂-, C₆ bis C₁₂-Arylen, an das weitere aromatische gegebenenfalls Heteroatome enthaltende Ringe kondensiert sein können,
oder ein Rest der Formel (II) oder (III) 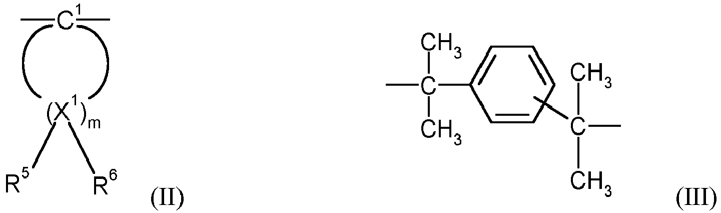
B jeweils C₁ bis C₁₂-Alkyl, vorzugsweise Methyl, Halogen, vorzugsweise Chlor und/oder Brom
x jeweils unabhängig voneinander 0, 1 oder 2,
p 1 oder 0 sind, und
R⁵ und R⁶ für jedes X¹ individuell wählbar, unabhängig voneinander Wasserstoff oder C₁ bis C₆-Alkyl, vorzugsweise Wasserstoff, Methyl oder Ethyl,
X1 Kohlenstoff und
m eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte aromatische Verbindungen mit mindestens zwei Hydroxylgruppen sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kernbromierte und/oder kernchlorierte Derivate.

Besonders bevorzugte aromatische Verbindungen mit mindestens zwei Hydroxylgruppen sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1 -Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3, 5-dichlor-4-hydroxyphenyl)-propan oder 2,2-Bis-(3, 5-dibrom-4-hydroxyphenyl)-propan. Insbesondere bevorzugt ist 2,2-Bis-(4-hydroxyphenyl)-propan (Bisphenol-A).

Es können die aromatischen Verbindungen mit mindestens zwei Hydroxylgruppen einzeln oder als beliebige Mischungen eingesetzt werden. Die aromatischen Verbindungen mit mindestens zwei Hydroxylgruppen sind literaturbekannt oder nach literaturbekannten Verfahren erhältlich.

Für die Herstellung von thermoplastischen, aromatischen Polycarbonaten geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten aromatischen Verbindungen mit mindestens zwei Hydroxylgruppen..

Einsetzbare thermoplastische, aromatische Polycarbonate haben im Rahmen einer bevorzugten Ausführungsform der Erfindung mittlere Molekulargewichte (Gewichtsmittel M_{w}, gemessen durch GPC (Gelpermeationschromatographie) mit Polycarbonatstandard auf Basis Bisphenol A) von bevorzugt 20000 bis 40000 g/mol, weiter bevorzugt 24000 bis 32000 g/mol, besonders bevorzugt 26000 bis 30000 g/mol.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten aromatische Verbindung mit mindestens zwei Hydroxylgruppen, an dreifunktionellen oder mehr als dreifunktionellen Verbindungen, beispielsweise solchen mit drei und mehr phenolischen Gruppen.

Bevorzugt werden lineare Polycarbonate, weiter bevorzugt auf Basis von Bisphenol-A, eingesetzt.

Geeignet sind sowohl Homopolycarbonate als auch Copolycarbonate. Zur Herstellung erfindungsgemäß bevorzugt einsetzbarer Copolycarbonate können auch 1 bis 25 Gew.%, vorzugsweise 2,5 bis 25 Gew.%, bezogen auf die Gesamtmenge an einzusetzender aromatischer Verbindung mit mindestens zwei Hydroxylgruppen, Polydiorganosiloxane mit Hydroxyaryloxy-Endgruppen eingesetzt werden. Diese sind bekannt (US 3 419 634) und nach literaturbekannten Verfahren herstellbar. Ebenfalls geeignet sind Polydiorganosiloxanhaltige Copolycarbonate; die Herstellung der Polydiorganosiloxanhaltiger Copolycarbonate ist beispielsweise in der DE-A 3 334 782 beschrieben.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁ bis C₂₂-Alkylgruppen oder durch Halogenatome substituiert sein können, sowie aliphatische C₂ bis C₂₂-Monocarbonsäurechloride in Betracht.

Die Menge an Kettenabbrechern beträgt jeweils 0,1 bis 10 Mol%, bezogen im Falle der phenolischen Kettenabbrecher auf Mol aromatische Verbindung mit mindestens zwei Hydroxylgruppen und im Falle von Monocarbonsäurechlorid-Kettenabbrecher auf Mol Dicarbonsäuredichlorid.

Bei der Herstellung von aromatischen Polyestercarbonaten kann zusätzlich eine oder mehrere aromatische Hydroxycarbonsäure eingesetzt werden.

Die aromatischen Polyestercarbonate können sowohl linear als auch in bekannter Weise verzweigt sein (siehe dazu DE-A 2 940 024 und DE-A 3 007 934), wobei lineare Polyestercabonate bevorzugt sind.

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenontetracarbonsäuretetrachlorid, 1,4,5,8-Napthalintetracarbon-säuretetrachlorid oder Pyromellithsäuretetrachlorid, in Mengen von 0,01 bis 1,0 Mol% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytriphenyl)-methyl]-benzol, in Mengen von 0,01 bis 1,0 Mol% bezogen auf eingesetzte Diphenole verwendet werden. Phenolische Verzweigungsmittel können mit den Diphenolen vorgelegt werden; Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Esterals auch der Carbonatanteil der aromatischen Polyestercarbonate kann in Form von Blöcken oder statistisch verteilt im Polykondensat vorliegen.

Die aromatischen Polycarbonate und aromatischen Polyestercarbonate können in dem besagten Pyrolysegut des erfindungsgemäßen Verfahrens allein oder im beliebigen Gemisch eingesetzt werden.

Generell enthält das erfindungsgemäß eingesetzte Pyrolysat mindestens eine phosphorhaltige, organische Verbindung in einer speziellen Gesamtmenge für einen dadurch hervorgerufenen Eintrag eines Phosphorgehaltes, durch den nach erfolgter Pyrolyse die im Pyrolyseprodukt enthaltene Menge an aromatischer Verbindung mit genau einer Hydroxygruppe erhöht wird.

Es hat sich im Rahmen einer weiteren Ausführungsform als erfindungsgemäß bevorzugt erwiesen, wenn die phosphorhaltige, organische Verbindung ausgewählt wird aus phosphorhaltigen, organischen Verbindungen, deren Phosphor eine formale Oxidationsstufe von +5 aufweist.

Bevorzugt verwendbare phosphorhaltige, organische Verbindungen werden ausgewählt aus mindestens einer Verbindung der Gruppe, die gebildet wird aus organischen Phosphorsäureestern, organischen Phosphonsäureestern, organischen Phosphazenen und Phosphonataminen, insbesondere aus organischen Phosphorsäureestern und organischen Phosphonsäureestern. Besonders bevorzugt wird besagte phosphorhaltige, organische Verbindung ausgewählt aus mindestens einer Verbindung der Gruppe, die gebildet wird aus organischen Phosphorsäuremonoestern, organischen Phosphorsäurediestern, organischen Phosphorsäuretriestern, oligomeren Phosphorsäureestern. Mischungen von mehreren dieser Verbindungen können somit ebenso zum Einsatz kommen können.

Als vorgenannte Phosphonatamine und Phosphazene können solche, wie sie in WO 00/00541 und WO 01/18105 beschrieben sind, als phosphorhaltige, organische Verbindung eingesetzt werden.

Besonders bevorzugte phosphorhaltige, organische Verbindungen in Sinne dieser Erfindung sind Verbindungen der allgemeinen Formel (IV) 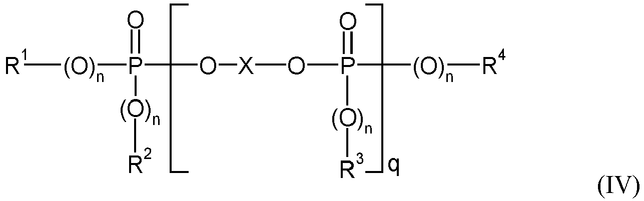 worin
R¹, R², R³ und R⁴, unabhängig voneinander jeweils gegebenenfalls halogeniertes C1 bis C8-Alkyl, jeweils gegebenenfalls durch Alkyl, vorzugsweise C1 bis C4-Alkyl, und/oder Halogen, vorzugsweise Chlor, Brom, substituiertes C5 bis C6-Cycloalkyl, C6 bis C20-Aryl oder C7 bis C12-Aralkyl,
n unabhängig voneinander, 0 oder 1,
q 0 bis 30 und
X einen mehrkernigen aromatischen Rest mit 12 bis 30 C-Atomen, oder einen linearen oder verzweigten aliphatischen Rest mit 2 bis 30 C-Atomen, der OH-substituiert sein und bis zu acht Etherbindungen enthalten kann, bedeuten.

Bevorzugt stehen R¹, R², R³ und R⁴ in der Formel (IV) unabhängig voneinander für C1 bis C4-Alkyl, Phenyl, Naphthyl oder Phenyl-C1-C4-alkyl. Die aromatischen Gruppen R¹, R², R³ und R⁴ können ihrerseits mit Halogen- und/oder Alkylgruppen, vorzugsweise Chlor, Brom und/oder C1 bis C4-Alkyl substituiert sein. Besonders bevorzugte Aryl-Reste sind Kresyl, Phenyl, Xylenyl, Propylphenyl oder Butylphenyl sowie die entsprechenden bromierten und chlorierten Derivate davon.
X in der Formel (IV) bedeutet bevorzugt einen mehrkernigen aromatischen Rest mit 12 bis 30 C-Atomen. Dieser leitet sich bevorzugt von aromatischen Verbindungen mit mindestens zwei Hydroxylgruppen gemäß allgemeiner Formel (I) ab.
n in der Formel (IV) kann, unabhängig voneinander, 0 oder 1 sein, vorzugsweise ist n gleich 1.
q steht für ganzzahlige Werte von 0 bis 30, bevorzugt 0 bis 20, besonders bevorzugt 0 bis 10, im Falle von Mischungen für Durchschnittswerte von 0,8 bis 5,0, bevorzugt 1,0 bis 3,0, weiter bevorzugt 1,05 bis 2,00, und besonders bevorzugt von 1,08 bis 1,60.
X steht in Formel (IV) besonders bevorzugt für 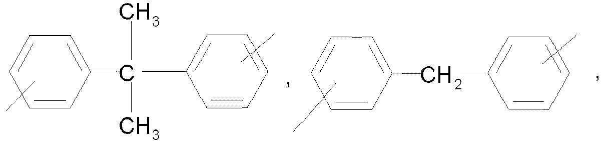 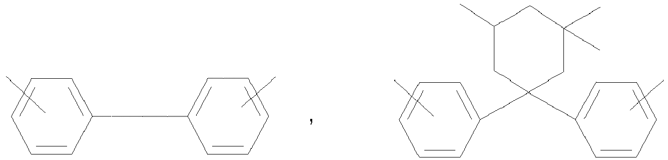 oder deren chlorierte oder bromierte Derivate, insbesondere leitet sich X von Bisphenol A oder Diphenylphenol ab. Besonders bevorzugt leitet sich X von Bisphenol A ab.

Phosphorverbindungen der Formel (IV) sind insbesondere Tributylphosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, und Bisphenol A verbrücktes Oligophosphat. Der Einsatz von oligomeren Phosphorsäureestern der Formel (IV), die sich vom Bisphenol A ableiten, ist insbesondere bevorzugt.

Höchst bevorzugt wird als phosphorhaltige, organische Verbindung Bisphenol-A basierendes Oligophosphat gemäß Formel (IVa) eingesetzt.

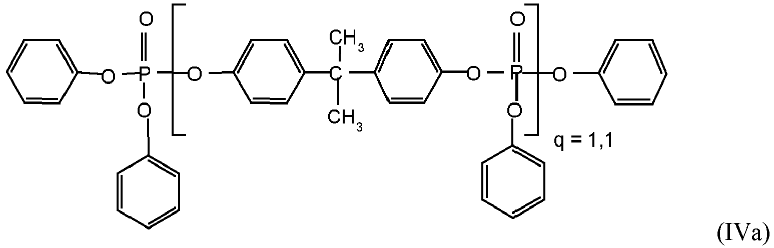

Die vorgenannten phosphorhaltigen, organischen Verbindungen sind bekannt (vgl. z.B. EP-A 0 363 608, EP-A 0 640 655) oder lassen sich nach bekannten Methoden in analoger Weise herstellen (z.B. Ullmanns Enzyklopädie der technischen Chemie, Bd. 18, S. 301 ff. 1979; Houben-Weyl, Methoden der organischen Chemie, Bd. 12/1, S. 43; Beilstein Bd. 6, S. 177).

Als erfindungsgemäß geeignete phosphorhaltige, organische Verbindungen können beispielsweise auch Mischungen von organischen Phosphorsäureestern mit unterschiedlicher chemischer Struktur und/oder mit gleicher chemischer Struktur und verschiedenem Molekulargewicht eingesetzt werden.

Vorzugsweise werden bei Einsatz von oligomeren Phosphorsäureestern als phosphorhaltige, organische Verbindung Mischungen mit gleicher Struktur und unterschiedlicher Kettenlänge verwendet, wobei es sich bei dem in den Formeln (IV) und (IVa) angegebenen q-Wert um den mittleren q-Wert handelt. Der mittlere q-Wert wird bestimmt, indem mittels High Pressure Liquid Chromatography (HPLC) bei 40°C in einem Gemisch aus Acetonitril und Wasser (50:50) die Zusammensetzung der Phosphorverbindung (Molekulargewichtsverteilung) bestimmt wird und daraus die Mittelwerte für q berechnet werden.

Eine besonders bevorzugte Ausführungsform des Pyrolysegutes enthält bezogen auf dessen Gesamtgewicht phosphorhaltige, organische Verbindungen, insbesondere vorgenannte bevorzugte phosphorhaltige organische Verbindungen (besonders solche der Formel (IV)), in einer Gesamtmenge von 0,1 bis 20,0 Gew.-%, weiter bevorzugt von 0,5 bis 15,0 Gew.-%, ganz besonders bevorzugt von 2,0 bis 12,0 Gew.-%.

Eine weitere besonders bevorzugt im Verfahren genutzte Ausführungsform des Pyrolysegutes kennzeichnet sich dadurch, dass gemäß Schritt (a) das Verhältnis des Gesamtgewichtes aller im Pyrolysegut enthaltenen phosphorhaltigen, organischen Verbindungen zum Gesamtgewicht aller im Pyrolysegut enthaltenen Polycarbonat-haltigen Verbindungen in einem Gewichtsverhältnisbereich von 1 zu 1000 bis 1 zu 5, weiter bevorzugt von 1 zu 200 bis 1 zu 7, ganz besonders bevorzugt von 1 zu 50 bis 1 zu 10, liegt.

Das besagte Pyrolysegut kann bevorzugt neben mindestens einer Polycarbonat enthaltenden Verbindung und neben mindestens einer phosphorhaltigen, organischen Verbindung zusätzlich mindestens ein Polymer, enthaltend von Styrol abgeleitete Struktureinheiten, enthalten. Darunter fallen beispielsweise Polymere, in denen sich mindestens eine Wiederholungseinheit ableitet von gegebenenfalls am aromatischen Ring substituiertem Styrol (wie insbesondere Styrol, α-Methylstyrol, p-Methylstyrol, p-Chlorstyrol).

In einer Ausführungsform des erfindungsgemäßen Verfahrens kann im Pyrolysegut ein solches Polymer, enthaltend von Styrol abgeleitete Struktureinheiten, eingesetzt werden, das mindestens zehn Wiederholungseinheiten der Formel

*-CR¹Ph-CH₂-*

enthält, worin * eine Valenz der Wiederholungseinheit des Polymerrückgrats kennzeichnet, R¹ für ein Wasserstoffatom oder eine Methylgruppe und Ph für eine, gegebenenfalls mit mindestens einer Gruppe ausgewählt aus (C₁ bis C₄)-Alkylgruppe, Halogenatom (insbesondere Chlor) substituierte, Phenylgruppe steht. Besonders bevorzugt enthält besagtes Pyrolysegut zusätzlich zu mindestens einer Polycarbonat enthaltenden Verbindung mindestens ein Polymer, enthaltend von Styrol abgeleitete Struktureinheiten, das mindestens zehn Wiederholungseinheiten obiger Formel enthält, abgeleitet von Styrol (R¹ = H, Ph = Phenyl), α -Methylstyrol (R¹ = Methyl, Ph = Phenyl), p-Methylstyrol (R¹ = H, Ph = 4-Methyl-phenyl), p-Chlorstyrol (R¹ = H, Ph = 4-Chlorphenyl) oder von Mischungen daraus.

Ein erfindungsgemäß bevorzugt einsetzbares Pyrolysegut, enthält zusätzlich als Polymer, enthaltend von Styrol abgeleitete Struktureinheiten, mindestens ein Polymer, ausgewählt aus kautschukmodifizierten Pfropfpolymerisaten (B1) enthaltend von Styrol abgeleitete Struktureinheiten, und kautschukfreien Vinyl(Co)Polymerisaten enthaltend von Styrol abgeleitete Struktureinheiten (B2) oder eine Mischung mehrerer solcher Polymerisate.

Solche bevorzugt zum Einsatz kommenden kautschukmodifizierten Pfropfpolymerisate (B1) umfassen
B.1.15 bis 95, vorzugsweise 15 bis 92, insbesondere 25 bis 60 Gew.-%, bezogen auf Komponente B.1, wenigstens eines Vinylaromaten und/oder kernsubstituierten Vinylaromaten (wie Styrol, α-Methylstyrol, p-Methylstyrol, p-Chlorstyrol) auf
B.1.2 95 bis 5, vorzugsweise 85 bis 8, insbesondere 75 bis 40 Gew.-%, bezogen auf Komponente B.1, einer oder mehrerer kautschukartiger Pfropfgrundlagen, vorzugsweise mit Glasübergangstemperaturen < 10°C, weiter bevorzugt < 0°C, besonders bevorzugt < -20°C.

Die Glasübergangstemperatur wird mittels dynamischer Differenzkalorimetrie (DSC) gemäß der Norm DIN EN 61006 bei einer Heizrate von 10 K/min mit Definition der T_{g} als Mittelpunkttemperatur (Tangentenmethode) bestimmt.

Die Pfropfgrundlage B.1.2 hat im Allgemeinen eine mittlere Teilchengröße (dso-Wert) von 0,05 bis 10 µm, vorzugsweise 0,1 bis 5 µm, besonders bevorzugt 0,2 bis 1 µm. Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

### Monomere B.1.1 sind vorzugsweise Gemische aus

B. 1.1.1 50 bis 99, bevorzugt 60 bis 80, insbesondere 70 bis 80 Gew.-Teile, bezogen auf B. 1.1, Vinylaromaten und/oder kernsubstituierten Vinylaromaten (insbesondere ausgewählt aus Styrol, α-Methylstyrol, p-Methylstyrol, p-Chlorstyrol oder Mischungen daraus), und
B. 1.1.2 1 bis 50, bevorzugt 20 bis 40, insbesondere 20 bis 30 Gew.-Teilen, bezogen auf B. 1.1, Vinylcyanide (ungesättigte Nitrile wie Acrylnitril und Methacrylnitril) und/oder (Meth)Acrylsäure-(C₁-C₈)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid und N-Phenyl-Maleinimid.

Bevorzugte Monomere B.1.1.1 sind ausgewählt aus mindestens einem der Monomere Styrol und α-Methylstyrol, bevorzugte Monomere B.1.1.2 sind ausgewählt aus mindestens einem der Monomere Acrylnitril, Maleinsäureanhydrid und Methylmethacrylat. Besonders bevorzugte Monomere sind B.1.1.1 Styrol und B.1.1.2 Acrylnitril.

Für die Pfropfpolymerisate B.1 geeignete Pfropfgrundlagen B.1.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren-und Ethylen/Vinylacetat-Kautschuke sowie Silikon/Acrylat-Kompositkautschuke.

Bevorzugte Pfropfgrundlagen B.1.2 sind Dienkautschuke, beispielsweise auf Basis Butadien und Isopren, oder Gemische von Dienkautschuken oder Copolymerisate von Dienkautschuken oder deren Gemischen mit weiteren copolymerisierbaren Monomeren (z.B. gemäß B.1.1.1 und B.1.1.2).

Besonders bevorzugt als Pfropfgrundlage B.1.2 ist reiner Polybutadienkautschuk.

Besonders bevorzugte Polymerisate B.1 sind beispielsweise ausgewählt aus Copolymerisat aus Acrylnitril-Butadien-Styrol (auch als ABS-Polymerisat bezeichnet) oder Copolymerisat aus Methacrylat-Butadien-Styrol (auch als MBS-Polymerisat bezeichnet), wie sie z.B. in der DE-OS 2 035 390 (=US-PS 3 644 574) oder in der DE-OS 2 248 242 (=GB-PS 1 409 275) bzw. in Ullmanns, Enzyklopädie der Technischen Chemie, Bd. 19 (1980), S. 280 ff. beschrieben sind.

Die Pfropfcopolymerisate B.1 werden durch radikalische Polymerisation, z.B. durch Emulsions-, Suspensions-, Lösungs- oder Massepolymerisation, vorzugsweise durch Emulsionsoder Massepolymerisation hergestellt.

Der Gelanteil der Pfropfgrundlage B.1.2 beträgt mindestens 30 Gew.-%, vorzugsweise mindestens 40 Gew.-%, insbesondere mindestens 60 Gew.-%, jeweils bezogen auf B.1.2 und gemessen als unlöslicher Anteil in Toluol.

Der Gelgehalt der Pfropfgrundlage B.1.2 wird bei 25°C in einem geeigneten Lösungsmittel als in diesen Lösungsmitteln unlöslicher Anteil bestimmt (M. Hoffmann, H. Krömer, R. Kuhn, Polymeranalytik I und II, Georg Thieme-Verlag, Stuttgart 1977).

Besonders geeignete Pfropfkautschuke sind auch ABS-Polymerisate, die durch Redox-Initiierung mit einem Initiatorsystem aus organischem Hydroperoxid und Ascorbinsäure gemäß US-P 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B.1 auch solche Produkte verstanden, die durch (Co)Polymerisation der Pfropfmonomere in Gegenwart der Pfropfgrundlage gewonnen werden und bei der Aufarbeitung mit anfallen. Diese Produkte können demnach auch freies, d.h. nicht chemisch an den Kautschuk gebundenes (Co)Polymerisat der Pfropfmonomere enthalten.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Allylmethacrylat; mehrfach ungesättigte heterocyclische Verbindungen, wie Trivinyl- und Triallylcyanurat; polyfunktionelle Vinylverbindungen, wie Di- und Trivinylbenzole; aber auch Triallylphosphat und Diallylphthalat. Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen. Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage B.1.2. Bei cyclischen vernetzenden Monomeren mit mindestens drei ethylenisch ungesättigten Gruppen ist es vorteilhaft, die Menge auf unter 1 Gew.-% der Pfropfgrundlage B.1.2 zu beschränken.

Bevorzugte "andere" polymerisierbare, ethylenisch ungesättigte Monomere, die neben den Acrylsäureestern gegebenenfalls zur Herstellung der Pfropfgrundlage B.1.2 dienen können, sind z.B. Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage B.1.2 sind Emulsionspolymerisate, die einen Gelgehalt von mindestens 60 Gew.-% aufweisen.

Weitere geeignete Pfropfgrundlagen gemäß B.1.2 sind Silikonkautschuke mit pfropfaktiven Stellen, wie sie in den DE-OS 3 704 657, DE-OS 3 704 655, DE-OS 3 631 540 und DE-OS 3 631 539 beschrieben werden.

Bei den kautschukfreien Vinyl(Co)Polymerisaten gemäß Komponente B.2 handelt es sich vorzugsweise um kautschukfreie Homo- und/oder Copolymerisate von mindestens einem Monomeren aus der Gruppe der Vinylaromaten, Vinylcyanide (ungesättigte Nitrile), (Meth)-Acrylsäure-(Ci bis C₈)-Alkylester, ungesättigten Carbonsäuren sowie Derivaten (wie Anhydride und Imide) ungesättigter Carbonsäuren.

### Insbesondere geeignet sind (Co)Polymerisate B.2 aus

B.2.1 50 bis 99 Gew.-%, bevorzugt 60 bis 80 Gew.-%, insbesondere 70 bis 80 Gew.-%, jeweils bezogen auf das Gesamtgewicht des (Co)Polymerisats B.2, mindestens eines Monomeren ausgewählt aus der Gruppe der Vinylaromaten, wie beispielsweise Styrol, α-Methylstyrol, kernsubstituierten Vinylaromaten, wie beispielsweise p-Methylstyrol, p-Chlorstyrol, (und gegebenenfalls zusätzlich (Meth)Acrylsäure-(C₁-C₈)-Alkylester, wie beispielsweise Methylmethacrylat, n-Butylacrylat, tert.-Butylacrylat), und
B.2.2 1 bis 50 Gew.-%, bevorzugt 20 bis 40 Gew.-%, insbesondere 20 bis 30 Gew.-%, jeweils bezogen auf das Gesamtgewicht des (Co)Polymerisats B.2, mindestens eines Monomeren ausgewählt aus der Gruppe der Vinylcyanide, wie beispielsweise ungesättigte Nitrile wie z.B. Acrylnitril und Methacrylnitril, (Meth)Acrylsäure-(C₁-C₈)-Alkylester, wie beispielsweise Methylmethacrylat, n-Butylacrylat, tert.-Butylacrylat, ungesättigte Carbonsäuren und Derivate ungesättigter Carbonsäuren, wie beispielsweise Maleinsäureanhydrid und N-Phenyl-Maleinimid.

Diese (Co)Polymerisate B.2 sind harzartig, thermoplastisch und kautschukfrei. Besonders bevorzugt ist zumindest das Copolymerisat aus B.2.1 Styrol und B.2.2 Acrylnitril in besagtem Material enthalten.

Derartige (Co)Polymerisate B.2 sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise mittlere Molekulargewichte M_{w} (Gewichtsmittel, ermittelt durch GPC mit Polystyrol als Standard) zwischen 15.000 und 250.000 g/mol, bevorzugt im Bereich 80.000 bis 150.000 g/mol.

Besonders bevorzugt enthält das in dem Verfahren eingesetzte Pyrolysegut zusätzlich mindestens ein Polymer, enthaltend von Styrol abgeleitete Struktureinheiten, das ausgewählt wird aus mindestens einem Vertreter der Gruppe, die gebildet wird aus Polystyrol, Polybutadienkautschuk-modifiziertem Polystyrol (HIPS), Styrol-Acrylnitril-Copolymer (SAN), Acrylnitril-Butadien-Styrol-Terpolymer (ABS), Methylmethacrylat-Butadien-Styrol-Terpolymer (MBS) und Butylacrylat-Styrol-Acrylnitril-Terpolymer (ASA).

Besagtes Pyrolysegut kann neben mindestens einer Polycarbonat enthaltenden Verbindung und mindestens einer phosphorhaltigen, organischen Verbindung zusätzlich mindestens ein von vorgenannten Verbindungen verschiedenes Polymeradditiv enthalten, ausgewählt aus weiteren Flammschutzmitteln, Antidrippingmitteln, Flammschutzsynergisten, Rauchinhibitoren, Gleitund Entformungsmitteln, Nukleiermitteln, Antistatika, Leitfähigkeitsadditiven, Stabilisatoren (z.B. Hydrolyse-, Wärmealterungs- und UV-Stabilisatoren sowie Umesterungsinhibitoren), Fließfähigkeitspromotoren, Phasenverträglichkeitsvermittlern, weiteren von Komponenten A und B verschiedenen polymeren Bestandteilen (beispielsweise funktionelle Blendpartnern), Füll- und Verstärkungsstoffen sowie Farbstoffen und Pigmenten.

In bevorzugter Ausführungsform enthält besagtes Material mindestens ein solches zusätzliches Polymeradditiv ausgewählt aus der Gruppe bestehend aus Gleit- und Entformungsmitteln, Stabilisatoren (wie beispielsweise mindestens einen Stabilisator ausgewählt aus sterisch gehindertem Phenol, Schwefel-basiertem Co-Stabilisator oder Mischungen daraus), Fließfähigkeitspromotoren, Phasenverträglichkeitsvermittlern, weiteren polymeren Bestandteilen, Farbstoffen und Pigmenten.

In bevorzugter Ausführungsform enthält die Zusammensetzung als Entformungsmittel Pentaerythrittetrastearat.

Die Dosierung und Prozessierbarkeit des Pyrolysegutes in der Pyrolyse des erfindungsgemäßen Verfahrens lässt sich vereinfachten, indem besagtes Pyrolysegut im Schritt (a) neben besagten Verbindungen zusätzlich mindestens einen Füllstoff enthält. Besagter Füllstoff katalysiert bevorzugt nicht im Rahmen der Pyrolyse die thermische Zersetzung von Polycarbonat. Dabei ist es wiederum besonders bevorzugt, wenn der Füllstoff mindestens ein Metalloxid ist, das im Rahmen der Pyrolyse der thermischen Zersetzung von Polycarbonat nicht katalytisch wirksam ist, welches bevorzugt ausgewählt aus SiO2.

Das Polycarbonat Material wird vorzugsweise mit einem Füllstoff z.B. Sand gemischt, wodurch eine kontinuierliche Prozessführung des erfindungsgemäßen Verfahrens vereinfacht wird. Insbesondere wird ein Verkleben des besagten Materials im Reaktor und in der Zuführung der Dosiervorrichtung zum Reaktor vermieden. Im Rahmen einer Ausführungsform wird der Füllstoff und das besagte Material im Volumenverhältnis Füllstoff zu besagtem Material von mindestens 0,1 zu 1 bis 10 zu 1 dem Pyrolysegut als Gemisch zugeführt.

Um den Pyrolyse Prozess noch selektiver und effizienter durchzuführen, können zusätzlich Katalysatoren eingesetzt werden, die von den phosphorhaltigen, organischen Verbindungen verschieden sind. Eine effektivere und selektivere Zersetzung wird erhalten, wenn in einer Ausführungsform des erfindungsgemäßen Verfahrens das besagte im Schritt (a) eingebrachte Pyrolysegut neben besagten Verbindungen zusätzlich mindestens einen, die Reaktion der Zersetzung der besagten Polycarbonat enthaltenden Verbindung beeinflussenden Katalysator enthält. Ein entsprechender Katalysator kann die Pyrolysetemperatur herabsetzen, das Produktspektrum auf gewünschte Produkte reduzieren und gegebenenfalls die Verkokung minimieren. Für einen effizienten Prozess sind kostengünstige Katalysatoren bevorzugt. Dies können beispielsweise natürlich vorkommende Materialien wie anorganische Salze, feuerfeste Oxide, Mineralien und Industriesteine, in die optional Ionen in einem einfachen Ionenaustauschprozess ausgetauscht werden können, sein, da sie keine umfangreiche Synthese erfordern. Sie sind leicht verfügbar und sind daher relativ billig. Synthetische Katalysatoren wie Zeolithe (z.B. ZSM-5, A, X, Y, etc.) sind dagegen ein Beispiel für Katalysatoren, die zwar effektiv, aber nicht billig sind, da sie speziell hergestellt werden müssen.

Neben der Funktion als Katalysator können Katalysatoren ebenfalls die Dosierung und Prozessierbarkeit des Pyrolysegutes in der Pyrolyse vereinfachen. Bei Einsatz eines Katalysators kann in diesem Fall die eingesetzte Menge an Füllstoff reduziert werden. Im Rahmen einer Ausführungsform wird die Gesamtmenge an Füllstoff und Katalysator im Verhältnis zur Menge der besagten Polycarbonat enthaltenden Verbindung im Volumenverhältnis von mindestens 0,1 zu 1 bis 10 zu 1 dem Pyrolysegut als Gemisch zugeführt.

Bei der Pyrolysereaktion kann mindestens ein Katalysator ausgewählt werden aus der Gruppe, die gebildet wird aus alkalischen anorganischen Materialien, bevorzugter aus der oben definierten Gruppe von natürlich vorkommenden Materialien. Diese anorganischen Materialien können feuerfeste Oxide sein. Feuerfeste Oxide sind Metalloxide, die bei hohen Temperaturen von 300°C bis 700°C stabil sind. Solche als Katalysator fungierenden Oxide umfassen die Oxide von Aluminium, Magnesium, Zirkonium, Titan, Chrom, Zink, Zinn und andere Metalle oder Kombinationen von Aluminiumoxid mit Magnesiumoxid und oder Calciumoxid. Kristalline anorganische Materialien umfassen Aluminosilikate, SiliciumAluminiumphosphate, Silicalit, Spinelle und andere natürliche Zeolithe und Tone. Als besagter Katalysator eignet sich somit insbesondere mindestens eine Verbindung, aus der Gruppe, die gebildet wird aus anorganischen Salzen, Mineralien, Metalloxiden, Mischoxiden, Tonen, Zeolithen.

Es können sowohl homogene als auch heterogene Katalysatoren eingesetzt werden. Es sind jedoch solche Ausführungsformen des erfindungsgemäßen Verfahrens besonders geeignet, in denen der Katalysator ein heterogener Katalysator ist. Es hat sich als vorteilhaft erwiesen, wenn der Katalysator bevorzugt in Form festförmiger Teilchen (insbesondere in Form eines körnigen Gemenges) in den Reaktor eingebracht wird. Ein optional eingesetzter heterogener Katalysator weist besonders bevorzugt eine mittlere Teilchengröße seiner festförmigen Teilchen, insbesondere seiner losen, festförmigen Partikel des körnige Gemenges, einen mittleren Durchmesser X₅₀,₃ (Volumenmittel) von 0,01 mm bis 5 cm, bevorzugt von 0,1 mm bis 5 cm, auf. Der mittlere Teilchengrößendurchmesser X₅₀,₃ wird durch Siebung oder mittels eines Partikelgrößenanalysators Camsizer der Fa. Retsch bestimmt.

Bei Einsatz eines heterogenen Katalysators hat es sich als geeignet erwiesen, wenn die Katalysatorpartikel eine kleinere oder die gleiche Partikelgröße besitzen, wie die Partikel des die besagten Verbindungen enthaltenden zu pyrolysierenden Materials. Daher ist es bevorzugt, wenn im Pyrolysegut die mittlere Teilchengröße des darin befindlichen Katalysators höchstens der mittleren Teilchengröße des darin befindlichen Materials mit besagten Verbindungen entspricht.

Als besagten Katalysator kann das Pyrolysegut mindestens einen basischen Katalysator oder mindestens einen sauren Katalysator oder deren Mischungen enthalten. Handelt es sich dabei um einen festförmigen, basischen Katalysator, kann die Anzahl und Stärke der basischen Zentren des Katalysators mittels Fourier Transform Infrarotspektroskopie und Temperature Programmed Desorption von CO₂ (TPD-CO2), oder auch für saure Katalysatoren mittels gängiger titrimetrischer Methoden bestimmt werden.

Wird ein Katalysator zugesetzt, kann dieser dem Füllmaterial beigemischt, auf das Füllmaterial aufgezogen, oder als Ersatz des Füllmaterials eingesetzt werden.

Wenn ein Katalysator eingesetzt wird, neigt dieser dazu, Ablagerungen von Koks und anderen Kohlenstoffrückständen zu erhalten. Deshalb wird bei Einsatz von Katalysator bevorzugt ein Reaktor eingesetzt, der einfach und vorzugsweise die Ausbringung und kontinuierliche Regeneration des Katalysators ermöglicht. Daher ist die Verwendung eines kontinuierlichen Rührkesselreaktors (CSTR), eines bewegliches Bettes, eines Schneckenreaktors, eines Schneckenfördererreaktors, eines Flugstromreaktors, eines Drehkegelreaktors oder eines fluidisierten Bettreaktors gegenüber der Verwendung eines Festbettreaktors bevorzugt.

Der (z.B. durch Verkokung) deaktivierte Katalysator befindet sich im Pyrolyserückstand und kann nach der Ausbringung des Pyrolyserückstandes aus dem Reaktor in einen Regenerator geleitet und nach der Regeneration dem in den Pyrolysereaktor einzubringenden Pyrolysegut des Schritts (b) zugeschlagen werden. Reaktoren, die eine kurze Kontaktzeit, ein intensives Mischen der Komponenten im Beschickungsstrom mit dem Katalysator und für eine kontinuierliche Rückführung des regenerierten Katalysators in die Pyrolysezone erlauben, sind am meisten bevorzugt. Da dies bei einem Schneckenreaktor, Drehrohrofen oder Wirbelbett der Fall ist, sind diese Reaktoren besonders bevorzugt.

Das in Schritt (a) in den Reaktor eingebrachte Pyrolysegut wird gemäß Schritt (b) unter Bildung von Pyrolysat und Pyrolyserückstand zumindest teilweise zersetzt.

Das Pyrolysegut wird nach dessen Einbringung in den Reaktor auf eine Temperatur im Bereich von 300°C bis 700°C aufgeheizt. Eine besonders erfolgreiche Verbesserung des Ergebnisses des erfindungsgemäßen Verfahrens lässt sich erreichen, wenn im Rahmen einer Ausführungsform das eingebrachte Pyrolysegut auf 300°C bis 700°C temperiert wird und nach Erreichen dieser Zieltemperatur die Verweildauer des entsprechend temperierten Pyrolysegutes bis zum Zeitpunkt der Ausbringung seines resultierenden Pyrolyserückstandes 1 Sekunde bis 2 Stunden, bevorzugt zwischen 2 Minuten und 60 Minuten, beträgt, und wobei die Temperatur und der Gehalt von Sauerstoffgas im Reaktor während dieses Zeitraums die in Schritt (b) definierten Werte betragen.

Falls das eingesetzte Pyrolysegut einen Katalysator enthält, befindet sich dieser Katalysator im ausgebrachten Pyrolyserückstand. Im Rahmen einer weiteren Ausführungsform des Verfahrens, wird daher der ausgebrachte Pyrolyserückstand wie oben beschrieben einem Regenerationsschritt des darin enthaltenen Katalysators zugeführt.

Davon unabhängig lassen sich gute Ergebnisse erzielen, wenn die in Schritt (b) stattfindende Herausführung des Pyrolysates aus dem Reaktor durch einen durch den Reaktor geführten Gasstrom oder durch Sog gewährleistet wird und weiter bevorzugt dadurch eine Verweildauer des Pyrolysates als Zeitraum zwischen dem Zeitpunkt der Einbringung der besagten im Schritt (a) in den Reaktor eingebrachten Verbindungen und dem Zeitpunkt der Ausbringung des Pyrolysates 0,1 Sekunden bis 10 Sekunden, bevorzugt zwischen 0,5 Sekunden und 5 Sekunden, besonders bevorzugt 0,5 Sekunden bis 2 Sekunden, beträgt.

Wird ein Gasstrom zu diesem Zweck durch den Reaktor geführt, eignet sich als Gas für diesen Gasstrom insbesondere ein Inertgas, bevorzugt ausgewählt aus Stickstoff, Argon, CO₂, NO oder einem Gemisch daraus.

Wird ein Gasstrom zur Ausbringung des Pyrolysates genutzt, ist es erfindungsgemäß bevorzugt, wenn die Fließgeschwindigkeit des Gasstromes im Reaktor als Leerrohrgeschwindigkeit im Bereich von 0,01 m/s bis 20 m/s liegt. Sollte als Reaktor ein Festbettreaktor gewählt werden, ist es erfindungsgemäß bevorzugt, wenn die Fließgeschwindigkeit des Gasstromes im Reaktor als Leerrohrgeschwindigkeit im Bereich von 0,03 m/s bis 1 m/s liegt. Sollte als Reaktor ein Wirbelbettreaktor gewählt werden, ist es erfindungsgemäß bevorzugt, die Fließgeschwindigkeit des Gasstromes im Reaktor als Leerrohrgeschwindigkeit im Bereich von 0,5 m/s bis 2 m/s liegt. Sollte als Reaktor ein Flugstromreaktor gewählt werden, ist es erfindungsgemäß bevorzugt, die Fließgeschwindigkeit des Gasstromes im Reaktor als Leerrohrgeschwindigkeit im Bereich von 5 m/s bis 20 m/s liegt.

Als erfindungsgemäße Bedingungen für die Zersetzung im Rahmen der Pyrolyse in Schritt (b) beträgt die Temperatur im Reaktor 300 bis 700 °C und die Menge an Sauerstoffgas im Reaktor beträgt von 0 bis 2,0 Vol.% bezogen auf das Gesamtvolumen der im Reaktor befindlichen Gase.

Für die Einstellung der erfindungsgemäßen Menge an Sauerstoffgas, wird der mit besagtem Pyrolysegut befüllte Reaktor mit Inertgas, insbesondere mit Stickstoff, Argon, CO₂, NO oder einer Mischung daraus befüllt. Dem Inertgas können zusätzlich von Sauerstoffgas verschiedene reaktive Gase beigemischt werden, insbesondere ausgewählt aus Methan, gasförmigem H₂O, Wasserstoffgas oder Gemischen daraus.

Um durch die Einbringung des Pyrolysegutes in den Reaktor das Eintragen von Sauerstoffgas zu minimieren, kann das Pyrolysegut vor dessen Einbringung in Schritt (a) von Sauerstoffgas befreit werden, z.B. durch Austreiben des Sauerstoffgases mittels einer Strippung mit einem Strippgas, z.B. in einem dem Reaktor vorgeschalteten Vorlagebehälter. Beispielsweise könnte als Strippgas Inertgas, insbesondere Stickstoff, Argon, CO₂, NO, Mischungen daraus, von oben oder von unten im Vorlagebehälter (bevorzugt von oben) über eine Fritte in den Behälter dem Pyrolysegut zu geführt werden, um so das Sauerstoffgas auszutreiben.

Im Rahmen einer bevorzugten Ausführungsform des erfindungsgemäßen Verfahrens beträgt die Temperatur im Schritt (b) von 350°C bis 650°C, bevorzugt zwischen 400°C und 650°C, besonders bevorzugt von 420°C bis 600°C, ganz besonders bevorzugt von 450°C bis 580°C.

Im Rahmen einer weiteren bevorzugten Ausführungsform des erfindungsgemäßen Verfahrens beträgt im Schritt (b) die Menge an Sauerstoffgas im Reaktor höchstens 0,5 Vol.%, bevorzugt 0,1 Vol.%, jeweils bezogen auf das Gesamtvolumen der im Reaktor befindlichen Gase.

Im Rahmen einer ganz bevorzugten Ausführungsform des erfindungsgemäßen Verfahrens beträgt im Schritt (b) erstens die Temperatur von 350°C bis 650°C, bevorzugt zwischen 400°C und 650°C, besonders bevorzugt von 420°C bis 600°C, ganz besonders bevorzugt von 450°C bis 580°C, und beträgt zweitens die Menge an Sauerstoffgas im Reaktor höchstens 0,5 Vol.%, bevorzugt 0,1 Vol.%, jeweils bezogen auf das Gesamtvolumen der im Reaktor befindlichen Gase.

Eine bevorzugte Ausführungsform des Verfahrens liefert eine kontinuierliche Prozessführung. Dafür laufen zumindest die Schritte (a) und (b) im Rahmen einer kontinuierlichen Prozessführung gleichzeitig ab.

Das gemäß Schritt (c) erhaltene Pyrolyseprodukt kann mit gängigen Trennungsmethoden aufgearbeitet werden und dadurch mindestens eine aromatische Verbindung mit einem Hydroxylsubstituenten, bevorzugt von Phenol, erhalten werden. Standardmäßig kann besagter Aromat mit einem Hydroxylsubstituenten, insbesondere Phenol, durch Destillation abgetrennt werden.

Das erfindungsgemäße Verfahren kann mit Hilfe einer entsprechend ausgestalteten Pyrolysevorrichtung durchgeführt werden. Dies ist beispielsweise eine Pyrolysevorrichtung für
die Erzeugung von Pyrolysat aus Pyrolysegut, enthaltend mindestens eine Dosiervorrichtung zur Einspeisung von Pyrolysegut, mindestens einen heizbaren Reaktor für die Pyrolyse, und mindestens einen Pyrolysat-Kollektor, dadurch gekennzeichnet, dass
besagter heizbarer Reaktor für die Pyrolyse mindestens eine Heizung enthält, die zur Temperierung des Reaktors auf eine Temperatur von 300°C bis 700°C verwendet werden kann, und mindestens einen Einlass für Pyrolysegut enthält und mindestens einen davon verschiedenen Auslass für Pyrolysat enthält; und
die Dosiervorrichtung und der heizbarer Reaktor für die Pyrolyse derart zueinander angeordnet und ausgestaltet sind, dass die Dosiervorrichtung über mindestens eine Zuleitung mit einem Einlass für Pyrolysegut des besagten Reaktors in Verbindung steht; und
der heizbare Reaktor für die Pyrolyse und der Pyrolysat-Kollektor miteinander in Fluidverbindung stehen, so dass die Herausführung des, bevorzugt gasförmigen, Pyrolysats aus besagtem Auslass für Pyrolysat und die Einbringung des herausgeführten Pyrolysats in den Pyrolysat-Kollektor möglich ist; und
mindestens ein Pyrolysat-Kollektor mindestens eine auf eine Temperatur unter 300°C temperierte Kühlvorrichtung enthält, die im besagten Kollektor zur Senkung der Temperatur des aus dem besagten Reaktor herausgeführten Pyrolysates auf weniger als 300°C unter Bildung von Pyrolyseprodukt, ausgewählt aus Pyrolysatkondensat, Pyrolysatresublimat oder einer Mischung daraus, verwendbar ist, und mindestens einen Behälter zur Sammlung und Ausbringung des unter Kühlung erhaltenen Pyrolyseprodukts enthält; und
mindestens eine Dosiervorrichtung zur Einspeisung von Pyrolysegut, mindestens ein heizbarer Reaktor für die Pyrolyse, und mindestens ein Pyrolysat-Kollektor derart zueinander angeordnet und ausgestaltet sind, dass sie gleichzeitig betrieben werden können.

Als Heizung des heizbaren Reaktors kein beispielsweise ein Heizelement, z.B. Heizwendel oder Heizplatten, dienen oder eine Vorrichtung zur Beheizung eines Gasstromes und zur Einbringung des beheizten Gasstroms in den Reaktor.

Der Reaktor enthält im Rahmen einer bevorzugten Ausführungsform zusätzlich mindestens einen Anschluss zu einer Gasquelle, wobei über eine Regelung, z.B. ein Ventil, ein Gasstrom im Reaktor, bevorzugt mit einer Fließgeschwindigkeit als Leerrohrgeschwindigkeit von zwischen 0,01 m/s bis20 m/s, durch den Reaktor in den Pyrolysat-Kollektor fließt. Sollte als Reaktor ein Festbettreaktor gewählt werden, ist es erfindungsgemäß bevorzugt, wenn die Fließgeschwindigkeit des Gasstromes im Reaktor als Leerrohrgeschwindigkeit im Bereich von 0,03 m/s bis 1 m/s liegt. Sollte als Reaktor ein Wirbelbettreaktor gewählt werden, ist es erfindungsgemäß bevorzugt, die Fließgeschwindigkeit des Gasstromes im Reaktor als Leerrohrgeschwindigkeit im Bereich von 0,5 m/s bis 2 m/s liegt. Sollte als Reaktor ein Flugstromreaktor gewählt werden, ist es erfindungsgemäß bevorzugt, die Fließgeschwindigkeit des Gasstromes im Reaktor als Leerrohrgeschwindigkeit im Bereich von 5 m/s bis 20 m/s liegt. Der Gasstrom aus der Gasquelle kann beispielsweise vor der Einbringung in den Reaktor wie zuvor beschrieben durch die Heizung beheizt werden.

Der Pyrolysat-Kollektor der erfindungsgemäßen Vorrichtung enthält bevorzugt eine Kühlvorrichtung, die im besagten Kollektor zur Senkung der Temperatur des aus dem besagten Reaktor herausgeführten Pyrolysates auf weniger als 50°C (weiter bevorzugt auf weniger als 30°C) unter Bildung von Pyrolyseprodukt verwendbar ist. Hierfür eignen sich bevorzugt Kühlaggregate die nach dem Wärmetauscherprinzip arbeiten.

Unter einer "Fluidverbindung" wird erfindungsgemäß ein Teil der Vorrichtung verstanden, der Anlagenteile miteinander verbindet und durch die sich ein Stoff, der in jedem Aggregatzustand vorliegen kann, von einem Anlagenteil zum nächsten transportieren lässt, beispielsweise eine Zuleitung in Form eines Rohres.

Ein weiterer Gegenstand der Erfindung ist die Verwendung einer vorgenannten PyrolyseVorrichtung zur Rückgewinnung von mindestens einer organischen aromatischen Verbindung mit genau einer Hydroxylgruppe durch Pyrolyse besagter Polycarbonat enthaltender Verbindung in Gegenwart von mindestens einer phosphorhaltigen, organischen Verbindung.

Im Rahmen einer bevorzugten Ausführungsform der Verwendung wird die PyrolyseVorrichtung zur Rückgewinnung von Phenol verwendet, das bei der Herstellung von Polycarbonat enthaltender Verbindung für die Synthese einer aromatischen Verbindung mit mindestens zwei Hydroxylgruppen eingesetzt wird.

Das erfindungsgemäße Verfahren, sowie die dafür nutzbare Vorrichtung tragen zur Lösung der zuvor gestellten Aufgabe bei und liefern nach Schritt (c) des Verfahrens als Pyrolyseprodukt eine Zusammensetzung, mindestens enthaltend jeweils bezogen auf das Gesamtgewicht der Zusammensetzung
(i) zwischen 0 und 10 Gew.-% einer Gesamtmenge von mindestens einer aromatischen Verbindung mit mindestens zwei Hydroxylgruppen, bevorzugt von Bisphenol-A,
(ii) mehr als 12 Gew.-% einer Gesamtmenge von mindestens einer aromatischen Verbindung mit genau einer Hydroxylgruppe, bevorzugt von Phenol,
(iii) gegebenenfalls weitere Inhaltsstoffe.

Es ist bevorzugt, wenn die Zusammensetzung eine geringe Menge an hochsiedenden Bestandteilen enthält. Eine bevorzugte Ausführungsform der obigen Zusammensetzung enthält daher zusätzlich zwischen 0,5 und 10,0 Gew.-% einer Gesamtmenge von mindestens einer organischen Verbindung ohne Hydroxylgruppe mit einem Siedepunkt bei 1013 mbar von mindestens 300°C.

Im Rahmen einer weiteren Ausführungsform der Zusammensetzung enthält diese mehr als 1,5 Gew.-% einer Gesamtmenge von mindestens einer aromatischen Verbindung mit mindestens einem Vinylsubstituenten, bevorzugt von Styrol oder α-Methylstyrol.

Zusammenfassend aber nicht beschränkend gelten folgende Aspekte 1 bis 26 der Erfindung als weitere Ausführungsformen:
1. Verfahren zur Pyrolyse von Polycarbonat-haltiger Verbindung, umfassend mindestens die folgenden Schritte
   (a) Einbringung von Pyrolysegut, mindestens enthaltend eine Polycarbonat enthaltende Verbindung und eine Gesamtmenge von phosphorhaltiger, organischer Verbindung, wobei besagte Gesamtmenge bezogen auf das Gesamtgewicht des Pyrolysegutes einen Anteil von mindestens 0,01 Gew.-% Phosphor, bevorzugt mindestens 0,05 Gew.-% Phosphor, weiter bevorzugt mindestens 0,1 Gew.-% Phosphor, besonders bevorzugt mindestens 0,5 Gew.-% Phosphor, beiträgt, in einen Reaktor;
   (b) Zersetzung zumindest der in Schritt (a) eingebrachten Polycarbonat enthaltenden Verbindung in dem Reaktor bei einer Temperatur von 300°C bis 700°C unter Erhalt von in der Gasphase befindlichem Produkt als Pyrolysat und von nicht in der Gasphase befindlichem Pyrolyserückstand, wobei
      (i) während der besagten Zersetzung die Menge an Sauerstoffgas im Reaktor höchstens 2,0 Vol.% bezogen auf das Gesamtvolumen der im Reaktor befindlichen Gase beträgt, und
      (ii) während der besagten Zersetzung das Pyrolysat aus dem Reaktor herausgeführt wird, und
      (iii) der besagte Pyrolyserückstand aus dem Reaktor herausgeführt wird;
   (c) Abkühlung des herausgeführten Pyrolysates auf eine Temperatur von weniger als 300°C unter Erhalt von Pyrolyseprodukt, ausgewählt aus Pyrolysatkondensat, Pyrolysatresublimat oder einer Mischung daraus;
   (d) optional Aufarbeitung des Pyrolyseprodukts.
2. Verfahren nach Aspekt 1, dadurch gekennzeichnet, dass die Temperatur im Schritt (b) von 350°C bis 650°C, bevorzugt zwischen 400°C und 650°C, besonders bevorzugt von 420°C bis 600°C, ganz besonders bevorzugt von 450°C bis 580°C beträgt.
3. Verfahren nach einem der vorangehenden Aspekte, dadurch gekennzeichnet, dass das eingebrachte Pyrolysegut auf 300°C bis 700°C temperiert wird und nach Erreichen dieser Zieltemperatur die Verweildauer des entsprechend temperierten Pyrolysegutes bis zum Zeitpunkt der Ausbringung seines resultierenden Pyrolyserückstandes 1 Sekunde bis 2 Stunden, bevorzugt zwischen 2 Minuten und 60 Minuten, beträgt.
4. Verfahren nach einem der vorangehenden Aspekte, dadurch gekennzeichnet, dass die Herausführung des Pyrolysates aus dem Reaktor durch einen durch den Reaktor geführten Gasstrom oder durch Sog gewährleistet wird und bevorzugt dadurch eine Verweildauer des Pyrolysates als Zeitraum zwischen dem Zeitpunkt der Einbringung des besagten im Schritt (a) in den Reaktor eingebrachten Materials und dem Zeitpunkt der Ausbringung des resultierenden Pyrolysates 0,1 Sekunden bis 10 Sekunden, bevorzugt zwischen 0,5 Sekunden und 5 Sekunden, besonders bevorzugt 0,5 Sekunden bis 2 Sekunden, beträgt.
5. Verfahren nach einem der vorangehenden Aspekte, dadurch gekennzeichnet, dass die Herausführung des Pyrolysates aus dem Reaktor durch einen durch den Reaktor geführten Gasstrom gewährleistet wird, dessen Fließgeschwindigkeit im Reaktor als Leerrohrgeschwindigkeit im Bereich von 0,01 m/s bis 20 m/s liegt.
6. Verfahren nach einem der vorangehenden Aspekte, dadurch gekennzeichnet, dass zumindest die Schritte (a) und (b) im Rahmen einer kontinuierlichen Prozessführung gleichzeitig ablaufen.
7. Verfahren nach einem der vorangehenden Aspekte, dadurch gekennzeichnet, dass im Schritt (b) die Menge an Sauerstoffgas im Reaktor höchstens 0,5 Vol.%, bevorzugt höchstens 0,1 Vol.%, jeweils bezogen auf das Gesamtvolumen der im Reaktor befindlichen Gase beträgt.
8. Verfahren nach einem der vorangehenden Aspekte, dadurch gekennzeichnet, dass der mit besagtem Pyrolysegut befüllte Reaktor mit Inertgas, insbesondere mit Stickstoff, Argon, CO₂, NO oder Mischungen daraus, befüllt wird.
9. Verfahren nach einem der vorangehenden Aspekte, dadurch gekennzeichnet, dass die Polycarbonat enthaltende Verbindung mindestens eine Verbindung ist, die mindestens zehn Struktureinheiten 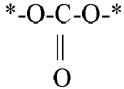 enthält, worin * eine Valenz des Polymerrückgrats kennzeichnet.
10. Verfahren nach einem der vorangehenden Aspekte, dadurch gekennzeichnet, dass die Polycarbonat enthaltende Verbindung mindestens eine Verbindung ist, welche sauerstofffunktionalisierte, aromatische Strukturfragmente enthält.
11. Verfahren nach einem der vorangehenden Aspekte, dadurch gekennzeichnet, dass die Polycarbonat enthaltende Verbindung mindestens eine Verbindung ist, die durch Umsetzung von mindestens einer aromatischen Verbindung mit mindestens zwei Hydroxylgruppen, bevorzugt Bisphenol-A, und (ii) Phosgen oder Diphenylcarbonat erhalten wurde.
12. Verfahren nach einem der vorangehenden Aspekte, dadurch gekennzeichnet, dass der in besagter phosphorhaltigen, organischen Verbindung enthaltende Phosphor eine formale Oxidationsstufe von +5 aufweist.
13. Verfahren nach einem der vorangehenden Aspekte, dadurch gekennzeichnet, dass besagte phosphorhaltige, organische Verbindung ausgewählt wird aus mindestens einer Verbindung der Gruppe, die gebildet wird aus organischen Phosphorsäureestern, organischen Phosphonsäureestern, organischen Phosphazenen und Phosphonataminen, insbesondere aus organischen Phosphorsäureestern und organischen Phosphonsäureestern.
14. Verfahren nach einem der vorangehenden Aspekte, dadurch gekennzeichnet, dass besagte phosphorhaltige, organische Verbindung ausgewählt wird aus mindestens einer Verbindung der Gruppe, die gebildet wird aus organischen Phosphorsäuremonoestern, organischen Phosphorsäurediestern, organischen Phosphorsäuretriestern, oligomeren Phosphorsäureestern.
15. Verfahren nach einem der vorangehenden Aspekte, dadurch gekennzeichnet, dass die phosphorhaltige, organische Verbindung ausgewählt wird aus mindestens einer Verbindung der allgemeinen Formel (IV) 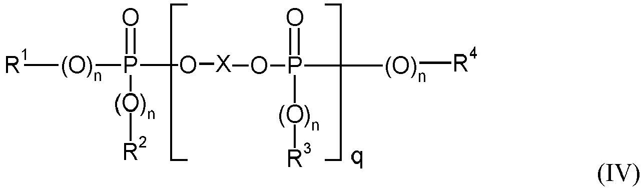 worin
   R¹, R², R³ und R⁴, unabhängig voneinander stehen für gegebenenfalls halogeniertes C1 bis C8-Alkyl, gegebenenfalls durch Alkyl, vorzugsweise C1 bis C4-Alkyl, und/oder Halogen, vorzugsweise Chlor, Brom, substituiertes C5 bis C6-Cycloalkyl, gegebenenfalls durch Alkyl, vorzugsweise C1 bis C4-Alkyl, und/oder Halogen, vorzugsweise Chlor, Brom, substituiertes C6 bis C20-Aryl oder gegebenenfalls durch Alkyl, vorzugsweise C1 bis C4-Alkyl, und/oder Halogen, vorzugsweise Chlor, Brom, substituiertes C7 bis C12-Aralkyl,
   n unabhängig voneinander 0 oder 1, bevorzugt 1,
   q eine Zahl von 0 bis 30 und
   X einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten.
16. Verfahren nach Anspruch 15, dadurch gekennzeichnet, dass X der allgemeinen Formel (IV) für einen Rest ausgewählt aus 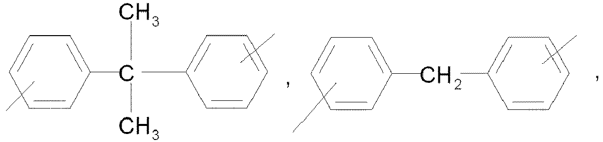 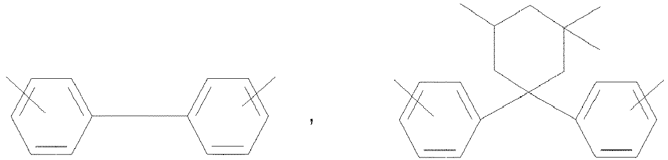 oder deren chlorierte oder bromierte Derivate steht.
17. Verfahren nach einem der vorangehenden Aspekte, dadurch gekennzeichnet, dass das Pyrolysegut bezogen auf sein Gesamtgewicht die phosphorhaltigen, organischen Verbindungen in einer Gesamtmenge von 0,1 bis 20,0 Gew.-%, weiter bevorzugt von 0,5 bis 15,0 Gew.-%, ganz besonders bevorzugt von 2,0 bis 12,0 Gew.-%, enthält.
18. Verfahren nach einem der vorangehenden Aspekte, dadurch gekennzeichnet, dass gemäß Schritt (a) das Verhältnis des Gesamtgewichtes aller im Pyrolysegut enthaltenen phosphorhaltigen, organischen Verbindungen zum Gesamtgewicht aller im Pyrolysegut enthaltenen Polycarbonat-haltigen Verbindungen in einem Gewichtsverhältnisbereich von 1 zu 1000 bis 1 zu 5, weiter bevorzugt von 1 zu 200 bis 1 zu 7, ganz besonders bevorzugt von 1 zu 50 bis 1 zu 10, liegt.
19. Verfahren nach einem der vorangehenden Aspekte, dadurch gekennzeichnet, dass das Pyrolysegut zusätzlich mindestens ein Polymer, enthaltend von Styrol abgeleitete Struktureinheiten, enthält.
20. Verfahren nach Aspekt 19, dadurch gekennzeichnet, dass das Polymer, enthaltend von Styrol abgeleitete Struktureinheiten, ausgewählt wird aus mindestens einem Vertreter der Gruppe, die gebildet wird aus (schlagzähmodifiziertem) Polystyrol, Styrol-Acrylnitril-Copolymer (SAN), Acrylnitril-Butadien-Styrol-Terpolymer (ABS), Methylmethacrylat-Butadien-Styrol-Terpolymer (MBS) und Butylacrylat-Styrol-Acrylnitril-Terpolymer (ASA).
21. Verfahren nach einem der vorangehenden Aspekte, dadurch gekennzeichnet, dass die Polycarbonat enthaltenden Verbindungen und die phosphorhaltigen, organischen Verbindungen als Mischung in ein und demselben Material vermengt vorliegen, welches vorzugsweise in Form festförmiger Teilchen, insbesondere in Form eines körnigen Gemenges, in den Reaktor eingebracht wird.
22. Verfahren nach einem der vorangehenden Aspekte, dadurch gekennzeichnet, dass besagtes Pyrolysegut im Schritt (a) zusätzlich mindestens einen Füllstoff enthält.
23. Verfahren nach einem der vorangehenden Aspekte, dadurch gekennzeichnet, dass besagtes Pyrolysegut im Schritt (a) bezogen auf dessen Gesamtgewicht besagte Polycarbonat enthaltenden Verbindungen und phosphorhaltigen, organischen Verbindungen in einer Gesamtmenge von 10,0 bis 80,0 Gew.-%, weiter bevorzugt 30,0 bis 70,0 Gew.-%, enthält.
24. Verwendung einer Pyrolysevorrichtung für die Erzeugung von Pyrolysat aus Pyrolysegut, enthaltend mindestens eine Dosiervorrichtung zur Einspeisung von Pyrolysegut, mindestens einen heizbaren Reaktor für die Pyrolyse, und mindestens einen Pyrolysat-Kollektor, dadurch gekennzeichnet, dass
   besagter heizbarer Reaktor für die Pyrolyse mindestens ein Heizelement enthält, das zur Temperierung des Reaktors auf eine Temperatur von 300°C bis 700°C verwendet werden kann, und mindestens einen Einlass für Pyrolysegut enthält und mindestens einen davon verschiedenen Auslass für Pyrolysat enthält; und
   die Dosiervorrichtung und der heizbare Reaktor für die Pyrolyse derart zueinander angeordnet und ausgestaltet sind, dass die Dosiervorrichtung über mindestens eine Zuleitung mit einem Einlass für Pyrolysegut des besagten Reaktors in Verbindung steht; und
   der heizbare Reaktor für die Pyrolyse und der Pyrolysat-Kollektor miteinander in Fluidverbindung stehen, so dass die Herausführung des, bevorzugt gasförmigen, Pyrolysats aus besagtem Auslass für Pyrolysat und die Einbringung des herausgeführten Pyrolysats in den Pyrolysat-Kollektor möglich ist; und
   mindestens ein Pyrolysat-Kollektor mindestens eine auf eine Temperatur unter 300°C temperierte Kühlvorrichtung enthält, die im besagten Kollektor zur Senkung der Temperatur des aus dem besagten Reaktor herausgeführten Pyrolysates auf weniger als 300°C unter Bildung von Pyrolyseprodukt, ausgewählt aus Pyrolysatkondensat, Pyrolysatsublimat oder einer Mischung daraus, verwendbar ist, und mindestens einen Behälter zur Sammlung und Ausbringung des unter Kühlung erhaltenen Pyrolyseprodukts enthält; und
   mindestens eine Dosiervorrichtung zur Einspeisung von Pyrolysegut, mindestens ein heizbarer Reaktor für die Pyrolyse, und mindestens ein Pyrolysat-Kollektor derart zueinander angeordnet und ausgestaltet sind, dass sie gleichzeitig betrieben werden können,
   zur Rückgewinnung von mindestens einer organischen aromatischen Verbindung mit einer Hydroxylgruppe durch Pyrolyse besagter Polycarbonat enthaltender Verbindung in Gegenwart von mindestens einer phosphorhaltigen, organischen Verbindung.
25. Zusammensetzung, mindestens enthaltend jeweils bezogen auf das Gesamtgewicht der Zusammensetzung
   (i) weniger als 13 Gew.-% von mindestens einer aromatischen Verbindung mit mindestens zwei Hydroxylgruppen, bevorzugt von Bisphenol-A,
   (ii) mehr als 15 Gew.-% von mindestens einer aromatischen Verbindung mit genau einer Hydroxylgruppe, bevorzugt von Phenol,
   (iii) gegebenenfalls weitere Inhaltsstoffe.
26. Zusammensetzung nach Anspruch 25 enthaltend zusätzlich
   (iv) mehr als 5 Gew.-% von mindestens einer aromatischen Verbindung mit mindestens einem Vinylsubstituenten, bevorzugt von Styrol oder α-Methylstyrol.
27. Zusammensetzung nach Aspekt 25 oder 26, dadurch gekennzeichnet, dass es sich bei der Zusammensetzung um ein kondensiertes Pyrolyseprodukt handelt.
28. Zusammensetzunge nach Aspekt 27, dadurch gekennzeichnet, dass das kondensierte Pyrolyseprodukt erhalten wurde in einem Verfahren gemäß einem der Aspekte 1 bis 23.

### Beispiele

Folgende Pyrolysegüter wurden durch Schmelzecompoundierung in einem Doppelwellextruder ZSK25 (Coperion, Deutschland) bei einer Schmelzetemperatur von 260°C) hergestellt:

| **Zusammensetzung** | **A** | **B** | **C** |
|---|---|---|---|
| **Einsatzstoff** | **Gew.-%** | **Gew.-%** | **Gew.-%** |
| Lineares Polycarbonat auf Basis Bisphenol-A mit einem gewichtsgemittelten Molekulargewicht MW von 28.000 g/mol (bestimmt durch GPC bei Raumtemperatur in Methylenchlorid als Lösungsmittel gegen einen BPA-PC-Standard) | 59,8 | 70,0 | 70,0 |
| ABS-Polymer ¹ | 17,0 | 29,6 | 29,6 |
| ABS-Pulver ² | 8,0 | - | |
| Pentaerythrittetrastearat | 0,4 | 0,3 | 0,3 |
| Irganox^{®} 1076 ³ | 0,02 | 0,1 | 0,1 |
| IRGAFOS^{®} 168 ⁴ | 0,08 | 0,1 | - |
| BDP⁵ | 10,0 | - | 10,0 |
| Cycolac INP449^{® 6} | 1,0 | - | - |
| erfindungsgemäß eingetragener Gehalt an Phosphor (berechnet) | 1,6 | 0,005 | 1,45 |

| | | | |
|---|---|---|---|
| ¹ Acrylnitril(A)-Butadien(B)-Styrol(S)-Polymer, hergestellt im Masse-Polymerisationsverfahren, welches eine disperse Phase aus mit Styrol-Acrylnitril-Copolymerisat gepfropften Kautschukpartikeln basierend auf einem Polybutadienkautschuk als Pfropfgrundlage enthaltend als separierte disperse Phase eingeschlossenes Styrol-Acrylnitril-Copolymerisat sowie eine nicht chemisch an die Kautschukpartikel gebundene und nicht in den Kautschukpartikeln eingeschlossene Styrol-Acrylnitril-Copolymerisat-Matrix enthält. Das ABS-Polymer weist ein A:B:S-Verhältnis von 23:10:67 Gew.-% und einen Gelgehalt, bestimmt als in Aceton unlöslicher Anteil, von 20 Gew.-% auf. Der in Aceton lösliche Anteil des ABS-Polymers weist ein gewichtsgemitteltes Molekulargewicht M_{w} (gemessen per GPC in Tetrahydrofuran als Lösungsmittel mit Polystyrol als Standard) von 165 kg/mol auf. Die mittlere Partikelgröße der dispersen Phase D50, gemessen per Ultrazentrifugation, beträgt 0,85 µm. Die Schmelzeflussrate (MVR) der Komponente B-1, gemessen nach ISO 1133 (Version von 2012) bei 220°C mit einer Stempellast von 10 kg, beträgt 6,7 ml/10 min ² Acrylnitril-Butadien-Styrol-Pfropfpolymerisat mit Kern-Schale-Struktur, hergestellt durch Emulsions-Polymerisation von 43 Gew.-% bezogen auf das ABS-Polymerisat einer Mischung aus 27 Gew.-% Acrylnitril und 73 Gew.-% Styrol in Gegenwart von 57 Gew.-% bezogen auf das ABS-Polymerisat eines teilchenförmig vernetzten Polybutadienkautschuks als Pfropfgrundlage. Diese Polybutadienkautschuk-Pfropfgrundlage weist eine bimodale Teilchengrößenverteilung mit Maxima bei 0,28 µm und 0,40 µm und eine mittlere Partikelgröße D50, gemessen per Ultrazentrifugation, von 0,35 µm auf. ³ Thermostabilisator: 2,6-Di-tert.-butyl-4-(octadecanoxycarbonylethyl)phenol (BASF, Ludwigshafen, Deutschland) ⁴ Tris(2,4-di-tert.-butyl-phenyl)-phosphit (BASF, Ludwigshafen, Deutschland) ⁵ Bisphenol-A-Oligophosphat (ADK Stab FP-600, Adeka Polymer Additives Europe, Mulhouse, Frankreich) ⁶ Polytetrafluoroethylen (PTFE)-Präparat der Firma Sabic bestehend aus 50 Gew.-% PTFE enthalten in einer SAN-Copolymermatrix. | | | |

### Pyrolyse-Verfahren:

Die Pyrolyse der erfindungsgemäßen Pyrolysegüter (Zusammensetzungen A und C) sowie des nicht erfindungsgemäßen Pyrolysegutes (Zusammensetzung B) wurde in einem mit Ar durchströmten Festbettreaktor bei 500 °C durchgeführt. Die entsprechende Zusammensetzung wurde als Drop-In der Probe (Pellets, ca. 8 g) aus einem Vorratsbehälter in einen Probentiegel für schmelzende Proben im Bereich der heißen Zone in den Reaktor eingebracht. Die Verweilzeit des Pyrolysegutes betrug 30 min. Die Fließgeschwindigkeit des Gasstroms (Leerrohrgeschwindigkeit) im Reaktor betrug 0,07 m/s. Hinter dem Reaktor befanden sich 2 Kondensatoren, um das Pyrolysat abzukühlen und die Flüssigkomponenten aus dem entstehenden Pyrolyseprodukt abzutrennen und aufzusammeln. Der entstehende Koksanteil des Pyrolyserückstandes wurde durch Wiegen der Tiegel nach der Pyrolyse bestimmt. Das entweichende Gas nach den 2 Kondensatoren wurde mittels GC charakterisiert. Die Komponenten im als Öl anfallendem Pyrolyseprodukt wurden mit GC-FID bestimmt. Dazu wurde ein Agilent 7890A mit einer Säule SupelcoSPB 50 benutzt. Das Pyrolyse Öl wurde mit Aceton 1:50 oder 1:100 verdünnt. Die bei Raumtemperatur permanent gasförmigen Produkte wurden in Gasbags aufgefangen und per Mikrogaschromatographie untersucht.

**Ergebnis als Anteile bezogen auf Gewichtsteile eingesetzter Zusammensetzung:**

| **Pyrolyse Temperatur/ Zusammensetzung** | **Gas** | **Koks** | **Kondensiertes Pyrolyseprodukt** | **weitere Bestandteile*** | **Styrol*** | **Phenol*** | **BPA*** |
|---|---|---|---|---|---|---|---|
| 500°C / A | 15,0 | 15,4 | 53,4 | 49,7 | 11,2 | 28,1 | 11,0 |
| 500°C / B (Vergleich) | 16,7 | 12,8 | 65,1 | 59,2 | 8,6 | 10,0 | 22,2 |
| 500°C / C | 11,5 | 16,2 | 70,9 | 67,8 | 8,6 | 17,7 | 5,9 |

| | | | | | | | |
|---|---|---|---|---|---|---|---|
| * kennzeichnet Bestandteile des kondensierten Pyrolyseproduktes angegeben als Gew.-Anteil dieses kondensierten Pyrolyseproduktes | | | | | | | |

## Patentansprüche

1. Verfahren zur Pyrolyse von Polycarbonat-haltiger Verbindung, umfassend mindestens die folgenden Schritte
(a) Einbringung von Pyrolysegut, enthaltend mindestens eine Polycarbonat enthaltende Verbindung und eine Gesamtmenge von phosphorhaltiger, organischer Verbindung, wobei besagte Gesamtmenge bezogen auf das Gesamtgewicht des Pyrolysegutes einen Anteil von mindestens 0,01 Gew.-% Phosphor, bevorzugt mindestens 0,05 Gew.-% Phosphor, weiter bevorzugt mindestens 0,1 Gew.-% Phosphor, besonders bevorzugt mindestens 0,5 Gew.-% Phosphor, beiträgt, in einen Reaktor;
(b) Zersetzung zumindest der in Schritt (a) eingebrachten Polycarbonat enthaltenden Verbindung in dem Reaktor bei einer Temperatur von 300°C bis 700°C unter Erhalt von in der Gasphase befindlichem Produkt als Pyrolysat und von nicht in der Gasphase befindlichem Pyrolyserückstand, wobei
(i) während der besagten Zersetzung die Menge an Sauerstoffgas im Reaktor höchstens 2,0 Vol.% bezogen auf das Gesamtvolumen der im Reaktor befindlichen Gase beträgt, und
(ii) während der besagten Zersetzung das Pyrolysat aus dem Reaktor herausgeführt wird, und
(iii) der besagte Pyrolyserückstand aus dem Reaktor herausgeführt wird;
(c) Abkühlung des herausgeführten Pyrolysates auf eine Temperatur von weniger als 300°C unter Erhalt von Pyrolyseprodukt, ausgewählt aus Pyrolysatkondensat, Pyrolysatresublimat oder einer Mischung daraus;
(d) optional Aufarbeitung des Pyrolyseprodukts.

2. Verfahren nach Anspruch 1, **dadurch gekennzeichnet, dass** die Temperatur im Schritt (b) von 350°C bis 650°C, bevorzugt zwischen 400°C und 650°C, besonders bevorzugt von 420°C bis 600°C, ganz besonders bevorzugt von 450°C bis 580°C beträgt.

3. Verfahren nach einem der vorangehenden Ansprüche, **dadurch gekennzeichnet, dass** die Herausführung des Pyrolysates aus dem Reaktor durch einen durch den Reaktor geführten Gasstrom gewährleistet wird, dessen Fließgeschwindigkeit im Reaktor als Leerrohrgeschwindigkeit im Bereich von 0,01 m/s bis 20 m/s liegt.

4. Verfahren nach einem der vorangehenden Ansprüche, **dadurch gekennzeichnet, dass** die Polycarbonat enthaltende Verbindung mindestens eine Verbindung ist, welche sauerstofffunktionalisierte, aromatische Strukturfragmente enthält.

5. Verfahren nach einem der vorangehenden Ansprüche, **dadurch gekennzeichnet, dass** die Polycarbonat enthaltende Verbindung mindestens eine Verbindung ist, die durch Umsetzung von (i) mindestens einer aromatischen Verbindung mit mindestens zwei Hydroxylgruppen, bevorzugt Bisphenol-A, und (ii) Phosgen oder Diphenylcarbonat erhalten wurde.

6. Verfahren nach einem der vorangehenden Ansprüche, **dadurch gekennzeichnet, dass** der in besagter phosphorhaltigen, organischen Verbindung enthaltende Phosphor eine formale Oxidationsstufe von +5 aufweist.

7. Verfahren nach einem der vorangehenden Ansprüche, **dadurch gekennzeichnet, dass** besagte phosphorhaltige, organische Verbindung ausgewählt ist aus mindestens einer Verbindung der Gruppe, die gebildet wird aus organischen Phosphorsäureestern, organischen Phosphonsäureestern, organischen Phosphazenen und Phosphonataminen, insbesondere aus mindestens einer Verbindung der Gruppe, die gebildet wird aus organischen Phosphorsäureestern und organischen Phosphonsäureestern.

8. Verfahren nach einem der vorangehenden Ansprüche, **dadurch gekennzeichnet, dass** besagte phosphorhaltige, organische Verbindung ausgewählt wird aus mindestens einer Verbindung der Gruppe, die gebildet wird aus organischen Phosphorsäuremonoestern, organischen Phosphorsäurediestern, organischen Phosphorsäuretriestern, oligomeren Phosphorsäureestern.

9. Verfahren nach einem der vorangehenden Ansprüche, **dadurch gekennzeichnet, dass** die phosphorhaltige, organische Verbindung ausgewählt wird aus mindestens einer Verbindung der allgemeinen Formel (IV) 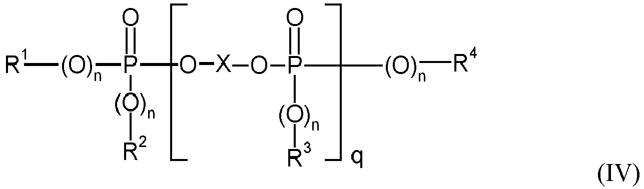 worin
R¹, R², R³ und R⁴, unabhängig voneinander stehen für gegebenenfalls halogeniertes C1 bis C8-Alkyl, gegebenenfalls durch Alkyl, vorzugsweise C1 bis C4-Alkyl, und/oder Halogen, vorzugsweise Chlor, Brom, substituiertes C5 bis C6-Cycloalkyl, gegebenenfalls durch Alkyl, vorzugsweise C1 bis C4-Alkyl, und/oder Halogen, vorzugsweise Chlor, Brom, substituiertes C6 bis C20-Aryl oder gegebenenfalls durch Alkyl, vorzugsweise C1 bis C4-Alkyl, und/oder Halogen, vorzugsweise Chlor, Brom, substituiertes C7 bis C12-Aralkyl,
n unabhängig voneinander 0 oder 1, bevorzugt 1,
q eine Zahl von 0 bis 30 und
X einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten.

10. Verfahren nach Anspruch 9, **dadurch gekennzeichnet, dass** X der allgemeinen Formel (IV) für einen Rest ausgewählt aus 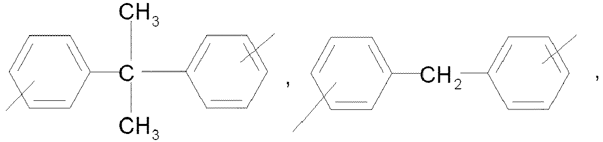 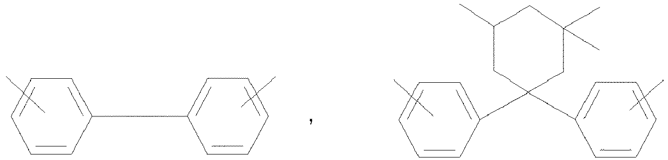 oder deren chlorierte oder bromierte Derivate steht.

11. Verfahren nach einem der vorangehenden Ansprüche, **dadurch gekennzeichnet, dass** das Pyrolysegut zusätzlich mindestens ein Polymer, enthaltend von Styrol abgeleitete Struktureinheiten, enthält.

12. Verfahren nach Anspruch 11, **dadurch gekennzeichnet, dass** das Polymer, enthaltend von Styrol abgeleitete Struktureinheiten, ausgewählt ist aus mindestens einem Vertreter der Gruppe, die gebildet wird aus Polystyrol, Polybutadienkautschuk-modifiziertem Polystyrol, Styrol-Acrylnitril-Copolymer, Acrylnitril-Butadien-Styrol-Terpolymer, Methylmethacrylat-Butadien-Styrol-Terpolymer und Butylacrylat-Styrol-Acrylnitril-Terpolymer.

13. Verfahren nach einem der vorangehenden Ansprüche, **dadurch gekennzeichnet, dass** die Polycarbonat enthaltenden Verbindungen und die phosphorhaltigen, organischen Verbindungen als Mischung in ein und demselben Material vermengt vorliegen, welches vorzugsweise in Form festförmiger Teilchen, insbesondere in Form eines körnigen Gemenges, in den Reaktor eingebracht wird.

14. Verfahren nach einem der vorangehenden Ansprüche, **dadurch gekennzeichnet, dass** besagtes Pyrolysegut im Schritt (a) zusätzlich mindestens einen Füllstoff enthält.

15. Verwendung einer Pyrolysevorrichtung für die Erzeugung von Pyrolysat aus Pyrolysegut, enthaltend mindestens eine Dosiervorrichtung zur Einspeisung von Pyrolysegut, mindestens einen heizbaren Reaktor für die Pyrolyse, und mindestens einen Pyrolysat-Kollektor, **dadurch gekennzeichnet, dass**
besagter heizbarer Reaktor für die Pyrolyse mindestens ein Heizelement enthält, das zur Temperierung des Reaktors auf eine Temperatur von 300°C bis 700°C verwendet werden kann, und mindestens einen Einlass für Pyrolysegut enthält und mindestens einen davon verschiedenen Auslass für Pyrolysat enthält; und
die Dosiervorrichtung und der heizbare Reaktor für die Pyrolyse derart zueinander angeordnet und ausgestaltet sind, dass die Dosiervorrichtung über mindestens eine Zuleitung mit einem Einlass für Pyrolysegut des besagten Reaktors in Verbindung steht; und
der heizbare Reaktor für die Pyrolyse und der Pyrolysat-Kollektor miteinander in Fluidverbindung stehen, so dass die Herausführung des, bevorzugt gasförmigen, Pyrolysats aus besagtem Auslass für Pyrolysat und die Einbringung des herausgeführten Pyrolysats in den Pyrolysat-Kollektor möglich ist; und
mindestens ein Pyrolysat-Kollektor mindestens eine auf eine Temperatur unter 300°C temperierte Kühlvorrichtung enthält, die im besagten Kollektor zur Senkung der Temperatur des aus dem besagten Reaktor herausgeführten Pyrolysates auf weniger als 300°C unter Bildung von Pyrolyseprodukt, ausgewählt aus Pyrolysatkondensat, Pyrolysatsublimat oder einer Mischung daraus, verwendbar ist, und mindestens einen Behälter zur Sammlung und Ausbringung des unter Kühlung erhaltenen Pyrolyseprodukts enthält; und
mindestens eine Dosiervorrichtung zur Einspeisung von Pyrolysegut, mindestens ein heizbarer Reaktor für die Pyrolyse, und mindestens ein Pyrolysat-Kollektor derart zueinander angeordnet und ausgestaltet sind, dass sie gleichzeitig betrieben werden können,
zur Rückgewinnung von mindestens einer organischen aromatischen Verbindung mit einer Hydroxylgruppe durch Pyrolyse besagter Polycarbonat enthaltender Verbindung in Gegenwart von mindestens einer phosphorhaltigen, organischen Verbindung.

16. Zusammensetzung, mindestens enthaltend jeweils bezogen auf das Gesamtgewicht der Zusammensetzung
(i) weniger als 13 Gew.-% von mindestens einer aromatischen Verbindung mit mindestens zwei Hydroxylgruppen, bevorzugt von Bisphenol-A,
(ii) mehr als 15 Gew.-% einer Gesamtmenge von mindestens einer aromatischen Verbindung mit genau einer Hydroxylgruppe, bevorzugt von Phenol,
(iii) gegebenenfalls weitere Inhaltsstoffe.
